# EUROPÄISCHE PATENTSCHRIFT

(11) **EP 3 885 275 B1**
(45) Veröffentlichungstag und Bekanntmachung des Hinweises auf die Patenterteilung: **28.08.2024**
(21) Anmeldenummer: 21160300.6
(22) Anmeldetag: 02.03.2021
(51) Int. Cl.: B65B 9/02, B65B 51/16, B65B 51/30, B29C 65/18, B65B 51/26, B65B 41/12

(54) **LÄNGSTRENNSCHWEISSEINRICHTUNG FÜR EINE VERPACKUNGSMASCHINE UND VERFAHREN ZUM VERPACKEN EINES PACKGUTS MIT EINER AUS EINER OBEREN PAPIERBAHN UND EINER UNTEREN PAPIERBAHN ERZEUGTEN UMVERPACKUNG**
CROSS-CUT WELDING DEVICE FOR A PACKAGING MACHINE AND METHOD FOR PACKAGING A PRODUCT WITH PACKAGING PRODUCED FROM AN UPPER PAPER SHEET AND A LOWER PAPER SHEET
DISPOSITIF DE SOUDAGE ET DE COUPURE LONGITUDINALE POUR UNE MACHINE D'EMBALLAGE ET PROCÉDÉ D'EMBALLAGE D'UN PRODUIT À EMBALLER AVEC UN EMBALLAGE EXTÉRIEUR PRODUIT À PARTIR D'UNE BANDE SUPÉRIEURE DE PAPIER ET D'UNE BANDE INFÉRIEURE DE PAPIER

(30) Priorität: 05.03.2020 DE 102020106030
(43) Veröffentlichungstag der Anmeldung: 29.09.2021
(73) Patentinhaber: Beck Packautomaten GmbH & Co. KG, 72636 Frickenhausen (DE)
(72) Erfinder: Schumayer, Ulrich, 72636 Frickenhausen (DE); Beck-Deharde, Beate, 72636 Frickenhausen (DE)
(74) Vertreter: Witte, Weller & Partner Patentanwälte mbB

(56) Entgegenhaltungen:
- EP-A2- 1 027 981
- EP-A2- 1 396 428
- EP-B1- 2 522 579
- DE-A1- 10 021 470
- DE-A1- 102015 122 560
- DE-A1- 102017 131 026
- DE-U1- 202016 005 970
- US-A- 2 893 468
- US-A- 3 552 088
- US-A- 3 874 976
- US-A- 5 417 041

## Beschreibung

Die vorliegende Erfindung betrifft eine Verpackungsmaschine zum Verpacken eines Packguts mit einer aus einer oberen Papierbahn und einer unteren Papierbahn erzeugten Umverpackung und ein Verfahren zum Steuern einer Verpackungsmaschine.

Verpackungsmaschinen werden in vielen industriellen Anwendungen zum Verpacken von unterschiedlichen Packgütern verwendet. Bei den Packgütern kann es sich um Konsumartikel wie beispielsweise Datenträger, Bücher oder übliche, in Supermärkten vertriebene Artikel handeln, aber auch um Sonderartikel wie beispielsweise Ersatzteile oder Baustoffe wie Ton. Auch bei Zeitschriften mit Beiliegern oder im Bereich des Versandhandels finden Verpackungsmaschinen regelmäßig Anwendung.

Die vorliegende Erfindung beschäftigt sich in erster Linie mit Verpackungsmaschinen, bei denen grundsätzlich zwischen Formschultermaschinen, Serienpackmaschinen und Banderoliermaschinen unterschieden wird. Während Formschultermaschinen und Serienpackmaschinen dazu vorgesehen sind, ein Packgut vollständig einzuhüllen, wird mittels einer Banderoliermaschine lediglich eine Banderole um ein zu verpackendes Packgut gelegt.

Allen Verpackungsmaschinen ist gemein, dass die Umverpackung an zumindest einer Seite verschweißt und abgetrennt werden muss. Für Banderolen ist dies in der Regel lediglich an einer Seite der Fall, bei Formschultermaschinen an zwei oder drei Seiten und bei Serienpackmaschinen an allen vier Seiten des Packguts. Verpackungsmaschinen weisen daher stets eine sogenannte Quertrennschweißeinrichtung auf, die die Umverpackung quer zur Transportrichtung des Packguts in der Verpackungsmaschine verschweißt und zumindest teilweise durchtrennt. Des Weiteren weisen Verpackungsmaschinen Längsschweißeinrichtungen bzw. Längstrennschweißeinrichtungen auf, die die Umverpackung parallel zu der Transportrichtung des Packguts verschweißen und einen eventuell vorhandenen Verpackungsmaterialüberstand abtrennen.

Unter "Verpackungsmaschine" sind im Rahmen der vorliegenden Erfindung somit alle der voranstehend genannten Arten von Verpackungsmaschinen zu verstehen, insbesondere beschäftigt sich die vorliegende Erfindung jedoch mit Serienpackmaschinen. Eine solche Serienpackmaschine zeigt beispielsweise die Druckschrift DE 10 2006 001 594 A1.

Den bekannten Verpackungsmaschinen ist gemein, dass es sich bei dem die Umverpackung bildenden Verpackungsmaterial um Kunststofffolie (z.B. Polyethylen, Polyolefin oder dergleichen) handelt. Derartige Kunststoffverpackungen können sich trotz zunehmenden Grades ihrer Wiederverwertbarkeit nachteilig auf die Umwelt auswirken. Im Bereich der Verpackungstechnik, insbesondere im Bereich des Versandhandels, kommt der Verwendung von Papier zum Verpacken von Packgütern daher eine immer größere Bedeutung zu. Eine beispielhafte Umverpackung aus Papier ist der Druckschrift DE 20 2019 105 885 U1 zu entnehmen.

Die Druckschrift DE 20 2016 005 970 U1 betrifft eine Verschweißeinrichtung, insbesondere als Teil einer Verpackungsmaschine zum Verpacken von Gegenständen, für eine durchlaufende Verpackungsfolie, die mit einer oberen Folienlage und einer unteren Folienlage Gegenstände im Wesentlichen überragt und/oder umhüllt und an mindestens einer Längsseite in Durchlaufrichtung mit den beiden Folienlagen durch die Verschweißeinrichtung verschweißbar ist. Die Verschweißeinrichtung weist ein rotierendes, beheizbares Schweißrad zum Verschweißen der Folienlagen und wenigstens ein an dem Schweißrad in einem Anlagebereich anliegendes mitlaufendes Gegenanlagemittel auf, wobei das Gegenanlagemittel ein umlaufender Riemen ist mit einer Abstützung gegen das Schweißrad, wobei die Abstützung mindestens ein Andrückrad aufweist, und wobei die Abstützung derart nahe an dem Anlagebereich des Schweißrades an dem Riemen angeordnet ist, dass ein Abstand von der Abstützung zu dem Anlagebereich innerhalb der Breite der Projektion des Schweißrades auf dem Riemen liegt.

Im Vergleich zu Kunststofffolien, die regelmäßig zum Erzeugen von Umverpackungen in Folienverpackungsmaschinen bekannter Art verwendet werden, ist die Bearbeitung von Papier angesichts der relativ geringen Beständigkeit gegen Spannungsrissbildung bzw. hohen Rissanfälligkeit deutlich komplexer. So sind die Folienbahnen herkömmlicher Folienverpackungsmaschinen beispielsweise während des Fördervorgangs, Längstrennschweiß- und/oder Quertrennschweißvorgangs hohen Zug- und Scherbelastungen ausgesetzt. Es hat sich gezeigt, dass ein bloßes Nachrüsten herkömmlicher Folienverpackungsmaschinen mit Papierbahnen anstelle von Folienbahnen aufgrund der erwähnten Rissanfälligkeit von Papier nicht zielführend ist.

Die Druckschrift EP 1 027 981 A2 zeigt eine Verschweißeinrichtung als Teil einer Verpackungsmaschine für Gegenstände in eine durchlaufende Folie in Form eines Längsschlauches. Die wenigstens zwei Folienlagen werden an einer Längsseite durch die Verschweißeinrichtung verschweißt. Die Verschweißeinrichtung weist ein rotierendes, beheiztes Trenn-Schweißrad zum Verschweißen der Folienlagen und zum Abtrennen eines Überstandes der Folie auf sowie wenigstens ein an dem Trenn-Schweißrad anliegendes mitlaufendes Gegenrad. Während das Trenn-Schweißrad in dem Berührungsbereich an dem Gegenrad hart bzw. starr ausgebildet ist, insbesondere aus Stahl, ist das Gegenrad in diesem Bereich teilflexibel. Die Teilflexibilität des Gegenrades kann durch einen äußeren Ring aus einem Fluorelastomer passender Härte bestehen, die beispielsweise bei ca. 75 Shore liegen kann. Das Axialprofil des Trenn-Schweißrades kann die Form einer geschweiften Klammer mit einem abstehenden Vorsprung in der Mitte haben, wobei der umlaufende Vorsprung das Durchtrennen der Folienlagen bewirkt.

Die Druckschrift DE 10 2015 122 560 A1 zeigt eine Längstrennschweißvorrichtung für eine Folienverpackungsmaschine, mit einer Trennschweißeinrichtung, die bewegbar zwischen einer Betriebsposition und einer Warteposition gelagert ist, und wobei die Längstrennschweißvorrichtung des Weiteren eine Anschlageinrichtung, die die Trennschweißeinrichtung in der Warteposition stützt, und eine Federeinrichtung aufweist, die die Trennschweißeinrichtung in die Warteposition in Anlage an das Anschlagelement vorspannt. Des Weiteren betrifft die vorliegende Erfindung eine Folienverpackungsmaschine mit mindestens einer Längstrennschweißeinrichtung und ein Verfahren zum Steuern einer Folienverpackungsmaschine.

Es ist daher eine Aufgabe der vorliegenden Erfindung, eine Längstrennschweißeinrichtung, ein Längstrennschweißsystem, eine Verpackungsmaschine und ein Verfahren zum Verpacken eines Packguts mit einer aus Papier erzeugten Umverpackung bereitzustellen.

Die Aufgabe wird gelöst durch eine Längstrennschweißeinrichtung mit den Merkmalen des Anspruchs 1 und mit einem Verfahren mit den Merkmalen des Anspruchs 15.

Gemäß einem ersten Aspekt der vorliegenden Erfindung wird eine Längstrennschweißeinrichtung zum Trennen und Verschweißen einer oberen Papierbahn und einer unteren Papierbahn bereitgestellt, wobei die Längstrennschweißeinrichtung mindestens ein erstes Paar von umlaufenden Endloselementen aufweist, die die obere und die untere Papierbahn zwischen sich einziehen und in einer Papierbahnebene führen, wobei die Längstrennschweißeinrichtung eine Verschweißeinrichtung aufweist, wobei die Verschweißeinrichtung jeweils ein beheizbares Schweißrad zum Verschweißen der Papierbahnen und eine Andrückbaugruppe zum Abstützen der Papierbahnen gegen das Schweißrad aufweist, wobei die Andrückbaugruppe mindestens ein Andrückrad, insbesondere genau zwei Andrückräder, aufweist, wobei das Schweißrad zwischen einer Arbeitsposition, in der die Andrückbaugruppe an dem Schweißrad anliegt, und einer Ruheposition, in der das Schweißrad von den Andrückbaugruppe beabstandet ist, verstellbar ist, und wobei die Verschweißeinrichtung zumindest ein Vorspannelement aufweist, das das Schweißrad in die Ruheposition vorspannt, wobei die aufeinanderliegenden Papierbahnen in der Arbeitsposition in einem Anlagebereich an dem Schweißrad anliegen, wobei genau zwei Andrückräder zum Abstützen der Papierbahnen gegen das Schweißrad vorgesehen sind, wobei die beiden Andrückräder voneinander in der Transportrichtung beabstandet sind und bezüglich der Papierbahnebene auf einer ersten Seite der aufeinanderliegenden Papierbahnen angeordnet sind, die einer zweiten Seite der aufeinanderliegenden Papierbahnen gegenüberliegt, auf der das Schweißrad angeordnet ist, wobei der Anlagebereich zwischen den beiden Andruckrädern liegt, und wobei der Anlagebereich derart ausgebildet ist, dass die aufeinanderliegenden Papierbahnen das Schweißrad zumindest teilweise entlang eines Außenumfangs umschlingen.

Unter dem Begriff "Papierbahn" wird vorliegend eine Verpackungsmateriallage aus Papier verstanden, wobei es sich hierbei jedoch auch um papierähnliches Material handeln kann, das aus anderen Stoffen als aus Holz gewonnenem Faserstoff besteht, jedoch die Eigenschaften hinsichtlich der für eine Verpackung geeigneten Eigenschaften, wie Festigkeit, Faltbarkeit oder dergleichen aufweist. Grundsätzlich sind jedoch auch hybride Verpackungsmaterialien (z.B. Papier-/Kunststoffverbunde oder dergleichen) mitinbegriffen. Es versteht sich von selbst, dass die obere und die untere Papierbahn an den einander zugewandten Innenflächen jeweils zumindest teilweise beschichtet ist, um eine thermische Versiegelung bzw. Verschweißung der aufeinanderliegenden Papierbahnen zu ermöglichen.

Unter dem Begriff "Endloselement" wird vorliegend ein in sich geschlossenes, insbesondere bandförmiges, Antriebselement zum Fördern von Papierbahnen verstanden, das beispielsweise als Riemen, Kette und/oder dergleichen ausgebildet sein kann. Derartige Endloselemente eignen sich aufgrund der flächigen Lastverteilung besonders gut zum Fördern der Papierbahnen.

Unter dem Begriff "Papierbahnebene" wird vorliegend diejenige Ebene verstanden, in der die obere Papierbahn und die untere Papierbahn zusammenlaufen und durch die Verpackungsmaschine transportiert und verarbeitet werden. Die Papierbahnebene kann beispielsweise diejenige Ebene sein, in der die Transporteinrichtung zum Transportieren des Packguts angeordnet ist, die Papierbahnebene kann jedoch auch beispielsweise auf annähernd halber Höhe des Packguts vorgesehen sein.

Im Rahmen der vorliegenden Beschreibung werden weiterhin die auf der Verarbeitung von Folien geläufigen Begriffe "Längstrennschweißeinrichtung" und "Quertrennschweißeinrichtung" verwendet. Allgemein wird entsprechend von einem "Verschweißen" der Papierbahnen gesprochen. Üblicherweise sind die Papierbahnen beschichtet, beispielsweise mit einem Kleber und/oder einem Kunststoff. Durch Wärmeintrag in den Kleber und/oder den Kunststoff werden so die Papierbahnen miteinander verbunden. Statt des Begriffs "Verschweißen" bzw. "Schweißen" könnten auch die Begriffe "Verkleben" bzw. "Kleben" oder "miteinander Versiegeln" genutzt werden. Entsprechend könnte statt "Längstrennschweißeinrichtung" und "Quertrennschweißeinrichtung" auch von "Längstrennklebeeinrichtung" und "Quertrennklebeeinrichtung" gesprochen werden oder von "Längstrennsiegeleinrichtung" und "Quertrennsiegeleinrichtung".

Durch das gemäß dem ersten Aspekt der vorliegenden Erfindung kann ein übermäßiger Wärmeeintrag des beheizten Schweißrades auf die Papierbahnen, der sich beispielsweise bei einem Stillstand der Papierbahnabschnitte in den Längstrennschweißeinrichtungen ergeben kann, durch die Verwendung des Vorspannelementes vermieden werden. Ein solcher Stillstand der Papierbahnabschnitte kann beispielsweise gewollt sein, etwa in taktend arbeitenden Verpackungsmaschinen. Ein Papierbahnstillstand kann aber auch aufgrund eines allgemeinen Maschinenstillstands erfolgen, sei es gewollt oder ungewollt aufgrund eines Stromausfalls oder Ähnlichem. Selbst wenn eine Beheizung der Trennschweißeinrichtung dann ebenfalls abgeschaltet wird, kann es bei sich relativ schnell abkühlenden Schweißrädern dazu kommen, dass die in der Nähe der Schweißräder befindlichen Papierbahnabschnitte unerwünschten thermischen Verformungen aufgrund des großen Wärmeeintrags unterliegen.

Unter dem Begriff Anlagebereich ist vorliegend der Bereich zu verstehen, in dem die aufeinanderliegenden Papierbahnen das jeweilige Schweißrad berühren bzw. an diesem anliegen. Es handelt sich dabei also gewissermaßen um einen gemeinsamen Berührabschnitt zwischen dem entsprechenden Schweißrad und den aufeinanderliegenden Papierbahnen. Der Anlagebereich kann dabei beispielsweise linienförmig oder flächig ausgebildet sein. Ein flächenförmiger Anlagebereich ist dem linienförmigen Anlagebereich zu bevorzugen, da sich bei dem flächenförmigen Anlagebereich die Wärmeübertragungsstrecke der zu verschweißenden Papierbahnabschnitte vergrößert. Je kürzer die Strecke der Wärmeübertragung ist, desto heißer muss das Schweißrad zum Versiegeln der Papierbahnen sein.

Durch das Vorsehen von zwei Andrückrädern anstatt eines Andrückrades kann eine höhere Abstützwirkung und folglich ein verbesserter Wärmeübergang von dem jeweiligen Schweißrad auf die Papierbahnen erzielt werden.

Mit anderen Worten sind die beiden Andrückräder der jeweiligen Verschweißeinrichtung voneinander beabstandet und liegen auf derselben Seite der Papierbahn an, nämlich beide auf der dem Schweißrad gegenüberliegenden Seite.

Gemäß einem weiteren Aspekt wird ein Längstrennschweißsystem mit einer ersten und einer zweiten Längstrennschweißeinrichtung zum Verschweißen der Papierbahnen parallel zu der Transportrichtung an zwei entgegengesetzten Längsseiten der Papierbahnen bereitgestellt, wobei sowohl die erste Längstrennschweißeinrichtung als auch die zweite Längstrennschweißeinrichtung eine Längstrennschweißeinrichtung nach dem ersten Aspekt der Erfindung oder einer seiner Ausgestaltungen ist, wobei die erste und die zweite Längstrennschweißeinrichtung jeweils mindestens das erste Paar von umlaufenden Endloselementen aufweist, die die erste und die zweite Papierbahn an den zwei entgegengesetzten Längsseiten der Papierbahnen zwischen sich einziehen und in einer Papierbahnebene führen.

Gemäß noch einem weiteren Aspekt wird eine Verpackungsmaschine zum Verpacken eines Packguts mit einer aus einer oberen Papierbahn und einer unteren Papierbahn erzeugten Umverpackung, wobei die Verpackungsmaschine ein erfindungsgemäßes Längstrennschweißsystem aufweist.

Gemäß einem zweiten Aspekt der vorliegenden Erfindung wird Verfahren zum Längstrennschweißen einer oberen und einer unteren Papierbahn, mit den Schritten des Bereitstellens einer Längstrennschweißeinrichtung, die mindestens ein erstes Paar von umlaufenden Endloselementen aufweist, die die obere und die untere Papierbahn zwischen sich einziehen und in einer Papierbahnebene führen, wobei die Längstrennschweißeinrichtung eine Verschweißeinrichtung aufweist, wobei die Verschweißeinrichtung jeweils ein beheizbares Schweißrad zum Verschweißen der Papierbahnen und eine Andrückbaugruppe zum Abstützen der Papierbahnen gegen das Schweißrad aufweist, wobei die Andrückbaugruppe mindestens ein Andrückrad, insbesondere genau zwei Andrückräder, aufweist, wobei das Schweißrad zwischen einer Arbeitsposition, in der die Andrückbaugruppe an dem Schweißrad anliegt, und einer Ruheposition, in der das Schweißrad von den Andrückbaugruppe beabstandet ist, verstellbar ist, wobei die aufeinanderliegenden Papierbahnen in der Arbeitsposition in einem Anlagebereich an dem Schweißrad anliegen, wobei genau zwei Andrückräder zum Abstützen der Papierbahnen gegen das Schweißrad vorgesehen sind, wobei die beiden Andrückräder voneinander in der Transportrichtung beabstandet sind und bezüglich der Papierbahnebene auf einer ersten Seite der aufeinanderliegenden Papierbahnen angeordnet sind, die einer zweiten Seite der aufeinanderliegenden Papierbahnen gegenüberliegt, auf der das Schweißrad angeordnet ist, wobei der Anlagebereich zwischen den beiden Andruckrädern liegt, und wobei der Anlagebereich derart ausgebildet ist, dass die aufeinanderliegenden Papierbahnen das Schweißrad zumindest teilweise entlang eines Außenumfangs umschlingen, des Förderns der oberen Papierbahn und der unteren Papierbahn durch die Längstrennschweißeinrichtung mittels des mindestens einen ersten Paars von umlaufenden Endloselementen, wobei das Schweißrad in die Arbeitsposition verstellt ist und die Papierbahnen verschweißt; und des getakteten oder intermittierenden Stoppens des Förderns der oberen Papierbahn und der unteren Papierbahn durch die Längstrennschweißeinrichtung, wobei das Schweißrad während Stoppens in die Ruheposition verstellt ist.

Auch auf diese Weise können über ein Verfahren die erfindungsgemäßen Vorteile bereitgestellt werden.

Die eingangs gestellte Aufgabe wird somit vollumfänglich gelöst.

In einer weiteren Ausgestaltung der Längstrennschweißeinrichtung gemäß dem ersten Aspekt der Erfindung kann vorgesehen sein, dass die aufeinanderliegenden Papierbahnen in der Ruheposition sowohl von dem Schweißmesser als auch von der Andrückbaugruppe beabstandet sind.

In der Ruheposition ist das jeweilige Schweißrad vorzugsweise außerhalb einer unmittelbaren Nähe, d.h. des Bereiches, in dem die Papierbahnen trotz des Abstandes zu dem Schweißrad noch verschweißt werden, beispielsweise infolge von Wärmestrahlung, der Papierbahnen bzw. Papierbahnabschnitte angeordnet, um im Stillstand einen weiteren Wärmeeintrag des Schweißrades auf das Papier zu vermeiden.

In einer weiteren Ausgestaltung der Längstrennschweißeinrichtung gemäß dem ersten Aspekt der Erfindung kann vorgesehen sein, dass das Schweißrad und das mindestens eine Andrückrad der Andrückbaugruppe gemeinsam angetrieben sind oder freilaufend angeordnet sind.

Demnach ist das Schweißrad als rotierendes, beheizbares Schweißrad ausgebildet. Auch das mindestens eine Andrückrad ist rotierend ausgebildet. Ein Vorteil dieser Ausgestaltung ist, dass die Papierbahnen ohne Schlupf durch die jeweilige Verschweißeinrichtung transportiert werden. Auf diese Weise werden die Papierbahnen gegenüber stillstehenden Schweiß- und Andrückrädern nicht durch die Verschweißeinrichtungen gezerrt, wodurch beim Durchlaufen der Papierbahnen durch die Verschweißeinrichtungen vergleichsweise weniger Verschleiß entsteht.

In einer weiteren Ausgestaltung der Längstrennschweißeinrichtung kann vorgesehen sein, dass die Längstrennschweißeinrichtung eine Mehrzahl von Verschweißeinrichtungen aufweist, die jeweils zumindest ein Vorspannelement aufweisen oder ein gemeinsames Vorspannelement aufweisen.

Auf diese Weise können beispielsweise zwei parallele Schweißnähte bzw. Verklebungen zwischen den Papierbahnen auf jeder der entgegengesetzten Seiten der Papierbahnen erzeugt werden. Die Verschweißeinrichtungen können jeweils ein separates Vorspannelement aufweisen. Sie können aber auch gemeinsam in die Ruheposition vorgespannt sein.

In einer weiteren Ausgestaltung der Längstrennschweißeinrichtung gemäß dem ersten Aspekt der Erfindung kann vorgesehen sein, dass das Schweißrad zwischen der Arbeitsposition und der Ruheposition orthogonal zu der Papierbahnebene verstellbar ist.

Mit anderen Worten ist das Schweißrad höhenverstellbar. Die Höhenverstellung kann beispielsweise entlang einer vertikalen Achse, d.h. parallel zu einem Normalenvektor der Papierbahnebene, erfolgen. Auf diese Weise kann bei stillstehenden Endloselementenpaaren der Längstrennschweißeinrichtungen das heiße Schweißrad schnellstmöglich von den Papierbahnen beabstandet werden.

In einer weiteren Ausgestaltung der Längstrennschweißeinrichtung gemäß dem ersten Aspekt der Erfindung kann vorgesehen sein, dass eine Rotationsachse des Schweißrades parallel zu einer Rotationsachse des mindestens einen Andruckrades der Andrückbaugruppe ist, wobei die Rotationsachse des mindestens einen Andrückrades innerhalb einer Breite der Projektion des Schweißrades auf die Papierbahnebene liegt.

Mit anderen Worten ist die Abrollrichtung des Schweißrades und die Abrollrichtung des zumindest einen Andrückrades der Andrückbaugruppe jeweils parallel zu der Transportrichtung ausgerichtet. Die Breite der Projektion des Schweißrades auf die Papierbahnebene erstreckt sich somit ebenfalls in der Transportrichtung. Innerhalb dieser Projektionsbreite ist die Rotationsachse des mindestens einen Andrückrades angeordnet. Auf diese Weise kann im Vergleich zu einer Anordnung außerhalb der Projektionsbreite der Wärmeübergang durch eine Vergrößerung der Anlagebereichs verbessert werden. Insbesondere kann dadurch auch eine kompakte Bauweise der Verschweißeinrichtung realisiert werden. In Anbetracht der kompakten Bauweise kann insbesondere auch vorgesehen sein, dass ein Durchmesser des zumindest einen Andrückrades kleiner ist als die halbe Breite der Projektion des Schweißrades auf die Papierbahnen.

In einer weiteren Ausgestaltung der Längstrennschweißeinrichtung gemäß dem ersten Aspekt der Erfindung kann vorgesehen sein, dass der Anlagebereich, insbesondere mittig, zwischen den beiden Andruckrädern liegt.

Ein Vorteil dieser Ausgestaltung ist, dass sich bezüglich einer Mittelebene des jeweiligen Schweißrades, welche orthogonal zu der Papierbahnebene ausgerichtet ist und die Rotationsachse des Schweißrades enthält, ein symmetrischer Anlagebereich und damit eine symmetrische Kraftverteilung einstellt. Alternativ kann vorgesehen sein, dass der Anlagebereich näher zu einem der beiden Andrückräder (z.B. zu dem Andrückrad stromaufwärts der Mittelebene oder zu dem Andrückrad stromabwärts der Mittelebene) verschoben ist. Insbesondere kann auch vorgesehen sein, dass die beiden Andrückräder den gleichen Durchmesser aufweisen.

In einer weiteren Ausgestaltung der Längstrennschweißeinrichtung gemäß dem ersten Aspekt der Erfindung kann vorgesehen sein, dass das Schweißrad oberhalb der Papierbahnebene angeordnet ist, und dass ein Außenumfang des Schweißrades unter eine Ebene reicht, die an den höchsten Punkten der zwei Andrückräder der Andrückbaugruppe anliegt.

Unter dem Begriff "höchster Punkt" kann vorliegend derjenige Punkt auf dem Außenumfang eines jeden Andrückrades verstanden werden, der in der Ruheposition den minimalen Abstand zu der unteren Papierbahn aufweist. Ein Vorteil dieser Ausgestaltung ist, dass sich im Vergleich zu einem Zustand, in dem der Außenumfang des oberen Schweißrades nicht unter die den höchsten Punkten der zwei Andrückräder zugewiesene Ebene reicht, ein verlängerter Anlagebereich und damit ein verbesserter Wärmeübergang auf die Papierbahnen einstellt. Insbesondere kann vorgesehen sein, dass der Durchmesser des jeweiligen Antriebsrades kleiner als die halbe Breite der Projektion des Schweißrades auf die Papierbahnen ist.

In einer weiteren Ausgestaltung der Längstrennschweißeinrichtung gemäß dem ersten Aspekt der Erfindung kann vorgesehen sein, dass das Schweißrad unterhalb der Papierbahnebene angeordnet ist, und dass ein Außenumfang des Schweißrades über eine Ebene reicht, die an den niedrigsten Punkten der Andrückräder der Andrückbaugruppe anliegt.

Unter dem Begriff "niedrigster Punkt" kann vorliegend derjenige Punkt auf dem Außenumfang eines jeden Andrückrades verstanden werden, der in der Ruheposition den minimalen Abstand zu der oberen Papierbahn aufweist.. Ein Vorteil dieser Ausgestaltung ist, dass sich im Vergleich zu einem Zustand, in dem der Außenumfang des unteren Schweißrades nicht über die den niedrigsten Punkten der zwei Andrückräder zugewiesene Ebene reicht, ein verlängerter Anlagebereich und damit ein verbesserter Wärmeübergang auf die Papierbahnen einstellt. Insbesondere kann vorgesehen sein, dass der Durchmesser des jeweiligen Antriebsrades kleiner als die halbe Breite der Projektion des Schweißrades auf die Papierbahnen ist.

In einer weiteren Ausgestaltung der Längstrennschweißeinrichtung gemäß dem ersten Aspekt der Erfindung kann vorgesehen sein, dass die jeweilige Verschweißeinrichtung in der Transportrichtung vor den ersten Paaren von Endloselementen der Längstrennschweißeinrichtungen angeordnet ist.

Durch das Anordnen der ersten Paare von Endloselementen stromabwärts der Verschweißeinrichtungen zum Längsschweißen der Papierbahnen kann eine Längsstraffung der Papierbahnen in der Transportrichtung sichergestellt werden. Insbesondere wirkt sich eine solche Anordnung auch positiv auf die Verschweißeinrichtung selbst aus, da im Vergleich zu bekannten Verschweißeinrichtungen auf zusätzliche Endloselemente zwischen dem Schweißrad und der Andrückbaugruppe verzichtet werden kann.

In einer weiteren Ausgestaltung der Längstrennschweißeinrichtung gemäß dem ersten Aspekt der Erfindung kann vorgesehen sein, dass jede Längstrennschweißeinrichtung des Weiteren eine Längstrenneinrichtung zum Durchtrennen der aufeinanderliegenden Papierbahnen parallel zu der Transportrichtung an zwei entgegengesetzten Längsseiten aufweist, wobei die Längstrenneinrichtung ein rotierendes Kreismesser und ein entgegengesetzt zu der Papierbahnebene angeordnetes Stützrad zum Abstützen der Papierbahnen gegen das Kreismesser aufweist, wobei das Kreismesser und das Stützrad sich in einer Kreismesserebene erstrecken, die parallel zu der Transportrichtung angeordnet ist, und dass das erste Paar von Endloselementen der jeweiligen Längstrennschweißeinrichtung in einer ersten Umlaufebene umläuft, wobei die erste Umlaufebene und die Kreismesserebene jeweils senkrecht zu der Papierbahnebene verlaufen, wobei die erste Umlaufebene und die Kreismesserebene parallel zueinander angeordnet sind.

Mit anderen Worten ist in der vorgeschlagenen Anordnung vorgesehen, dass eine Abrollrichtung des jeweiligen Kreismessers parallel zu den ersten Paaren von Endloselementen der Längstrennschweißeinrichtungen, und insbesondere parallel zu der Transportrichtung angeordnet ist. Zwischen dem rotierenden Kreismesser und dem entsprechenden Stützrad sind die aufeinanderliegenden Papierbahnen angeordnet. Bei dem rotierenden Kreismesser handelt es sich vorzugsweise um ein unbeheiztes, mechanisches Trennelement. Auf diese Weise entfällt die Notwendigkeit, das Kreismesser infolge eines Stromausfalls der Maschine oder eines Stillstandes der Papierbahnen von den Papierbahnen entkoppeln zu müssen.

In einer weiteren Ausgestaltung der Längstrennschweißeinrichtung gemäß dem ersten Aspekt der Erfindung kann vorgesehen sein, dass das Kreismesser und das Stützrad gemeinsam angetrieben sind.

Es kann vorgesehen sein, dass die Kreismesser und die Stützräder beispielsweise mittels der zweiten Antriebseinrichtung angetrieben sind. Grundsätzlich ist jedoch auch eine von der zweiten Antriebseinrichtung verschiedene Antriebseinrichtung ist denkbar. Alternativ kann vorgesehen sein, dass lediglich das Kreismesser angetrieben ist, das Stützrad hingegen freilaufend ausgebildet ist.

In einer weiteren Ausgestaltung der Längstrennschweißeinrichtung gemäß dem ersten Aspekt der Erfindung kann vorgesehen sein, dass die erste und die zweite Längstrennschweißeinrichtung des Weiteren jeweils mindestens ein zweites Paar von umlaufenden Endloselemente aufweist, die die aufeinanderliegenden Papierbahnen an den zwei entgegengesetzten Längsseiten der Papierbahnen zwischen sich einziehen und in der Papierbahnebene führen, wobei die Kreismesser in der Papierbahnebene orthogonal zu der Transportrichtung jeweils zwischen dem ersten Paar von Endloselementen der jeweiligen Längstrennschweißeinrichtung und dem zweiten Paar von Endloselementen derselben Längstrennschweißeinrichtung angeordnet ist.

Mit anderen Worten ist in der jeweiligen Längstrennschweißeinrichtung das Kreismesser derart zwischen dem ersten Paar von Endloselementen und dem zweiten Paar von Endloselementen angeordnet, dass die Papierbahnen auf der dem Packgut zugewandten Seite des Kreismessers und auf der entgegengesetzten, dem Packgut abgewandten Seite des Kreismessers in der Transportrichtung von dem ersten und dem zweiten Paar von Endloselementen geführt sind.

In einer weiteren Ausgestaltung der Längstrennschweißeinrichtung gemäß dem ersten Aspekt der Erfindung kann vorgesehen sein, dass das zweite Paar von Endloselementen der Längstrennschweißeinrichtungen jeweils in einer zweiten Umlaufebene umläuft, wobei die zweite Umlaufebene parallel zu der Kreismesserebene verläuft.

Es hat sich gezeigt, dass eine parallele Führung der Papierbahnen unter Verwendung von zueinander beabstandeten Endloselementenpaaren in der jeweiligen Längstrennschweißeinrichtung gegenüber einer quer nach außen geneigten Führung der Papierbahnen zu bevorzugen ist. Insbesondere kann durch die parallele Führung eine mögliche Rissfortpflanzung stromaufwärts der jeweiligen Längstrenneinrichtung vermieden werden, die sich andernfalls aufgrund der Querstraffung ergeben kann. Alternativ kann jedoch auch vorgesehen sein, dass die zweite Umlaufebene gegenüber der Kreismesserebene geneigt ist, um einen seitlichen Papierüberstand abzutrennen.

In einer weiteren Ausgestaltung der Längstrennschweißeinrichtung gemäß dem ersten Aspekt der Erfindung kann vorgesehen sein, dass die erste und die zweite Längstrennschweißeinrichtung jeweils ein sich in der Transportrichtung stromabwärts von den zweiten Paaren von Endloselementen angeordnetes Rollenpaar aufweist, wobei das jeweilige Rollenpaar der Längstrennschweißeinrichtungen dazu ausgebildet ist, die beiden Papierbahnen zwischen sich einzuziehen und in der Papierbahnebene zu führen, wobei die Rollen des jeweiligen Rollenpaars relativ zu der Transportrichtung unter einem Vorspannrollenwinkel nach außen verlaufen, insbesondere derart, dass ein mittels der Längstrenneinrichtung seitlich abgetrennter Papierüberstand von dem Rollenpaar der jeweiligen Längstrennschweißeinrichtung abtransportiert wird.

Auf diese Weise kann sichergestellt werden, dass der abgetrennte Papierüberstand relativ zur Transportrichtung nach außen läuft. Hierbei handelt es sich jedoch lediglich um eine optionale Ausgestaltung, die sich insbesondere dann eignet, wenn die die erste Umlaufebene und die zweite Umlaufebene parallel zur Kreismesserebene angeordnet sind.

In einer weiteren Ausgestaltung der Längstrennschweißeinrichtung gemäß dem ersten Aspekt der Erfindung kann vorgesehen sein, dass die zweite Antriebseinrichtung dazu ausgebildet ist, das erste Paar von Endloselementen und das zweite Paar von Endloselementen gemeinsam anzutreiben.

Durch das gemeinsame Antreiben der Paare von Endloselementen der Längstrennschweißeinrichtungen kann im Vergleich zu einem separaten Antreiben eine Steuerung der Längstrennschweißeinrichtungen vereinfacht werden.

In einer weiteren Ausgestaltung der Längstrennschweißeinrichtung gemäß dem ersten Aspekt der Erfindung kann vorgesehen sein, dass eine Fördergeschwindigkeit der zweiten Paare von Endloselementen der Fördergeschwindigkeit der ersten Paare von Endloselementen entspricht.

Auf diese Weise können mögliche Scherspannungen im Papier infolge einer Geschwindigkeitsdifferenz in den Endlosriemenpaaren der Längstrennschweißeinrichtungen vermieden werden.

In einer weiteren Ausgestaltung der Längstrennschweißeinrichtung gemäß dem ersten Aspekt der Erfindung kann vorgesehen sein, dass die Längstrenneinrichtung in der Transportrichtung stromabwärts von der jeweiligen Verschweißeinrichtung angeordnet ist.

Demnach werden die aufeinanderliegenden Papierbahnen in der Transportrichtung zunächst längsverschweißt und anschließend der Längstrenneinrichtung zum Durchtrennen der aufeinanderliegenden Papierbahnbereiche parallel zu der Transportrichtung an zwei entgegengesetzten Längsseiten der Umverpackung zugeführt. Grundsätzlich ist es jedoch auch möglich, die Längstrenneinrichtungen in der Transportrichtung neben oder stromaufwärts der Verschweißeinrichtungen anzuordnen.

Das Packgut wird mit einer Umverpackung verpackt. Die Umverpackung wird aus einer oberen und einer unteren Papierbahn erzeugt. Das Packgut wird zwischen der oberen und der unteren Papierbahn angeordnet. Die obere und die untere Papierbahn sind somit auf gegenüberliegenden Seiten des Packguts angeordnet. Erfindungsgemäß werden ferner die Paare von Endloselementen der Zuführeinrichtungen mit einer Fördergeschwindigkeit betrieben, die sich von einer Fördergeschwindigkeit der Paare von Endloselementen der Längstrennschweißeinrichtungen unterscheidet.

In einer Ausgestaltung der Verpackungsmaschine gemäß der Erfindung kann vorgesehen sein, dass die Verpackungsmaschine des Weiteren eine Steuereinrichtung aufweist, die dazu ausgebildet ist, die erste und die zweite Antriebseinrichtung unabhängig voneinander zu steuern.

Auf diese Weise kann sichergestellt werden, dass die erste Antriebseinrichtung zum Antreiben der Paare von Endloselementen der Zuführeinrichtungen und die zweite Antriebseinrichtung zum Antreiben der ersten Paare von Endloselementen der Längstrennschweißeinrichtungen unabhängig voneinander bzw. separat gesteuert werden. In anderen Worten kann durch die unabhängige Steuerung der beiden Antriebseinrichtungen eine Fördergeschwindigkeit der Papierbahnen in der jeweiligen Zuführeinrichtung unabhängig von einer Fördergeschwindigkeit der Papierbahnen in der jeweiligen Längstrennschweißeinrichtung bewirkt werden.

In einer weiteren Ausgestaltung der Verpackungsmaschine gemäß der Erfindung kann vorgesehen sein, dass die zweite Antriebseinrichtung verschieden von der ersten Antriebseinrichtung ist, wobei die erste Antriebseinrichtung einen ersten Motor aufweist und die zweite Antriebseinrichtung einen zweiten Motor aufweist, wobei der zweite Motor verschieden von dem ersten Motor ist, und wobei die Steuereinrichtung den ersten und den zweiten Motor steuert.

Auf diese Weise kann sichergestellt werden, dass die erste Antriebseinrichtung zum Antreiben der Paare von Endloselementen der Zuführeinrichtungen und die zweite Antriebseinrichtung zum Antreiben der ersten Paare von Endloselementen der Längstrennschweißeinrichtungen mittels zweier voneinander unabhängiger Motoren separat gesteuert werden. Alternativ besteht die Möglichkeit, die erste Antriebseinrichtung und die zweite Antriebseinrichtung mittels eines gemeinsamen Motors zu steuern, beispielsweise unter Verwendung eines Getriebes und einer Kupplungseinrichtung zum trennbaren Verbinden der Kraftübertragung zwischen dem Motor und dem Getriebe. Das Steuern zweier voneinander verschiedener Motoren ist aufgrund der geringeren Komplexität jedoch zu bevorzugen.

Beispielsweise kann der Motor ein Elektromotor sein. Es sind aber auch pneumatische, hydraulische, magnetische oder andere Motoren denkbar.

In einer weiteren Ausgestaltung der Verpackungsmaschine gemäß der Erfindung kann vorgesehen sein, dass die Steuereinrichtung des Weiteren dazu ausgebildet ist, die erste und die zweite Antriebseinrichtung derart zu steuern, dass die Paare von Endloselementen der Zuführeinrichtungen mit einer ersten Fördergeschwindigkeit angetrieben sind und die ersten Paare von Endloselementen der Längstrennschweißeinrichtungen mit einer zweiten Fördergeschwindigkeit angetrieben sind, wobei die erste Fördergeschwindigkeit sich von der zweiten Fördergeschwindigkeit unterscheidet.

Unter dem Begriff "Fördergeschwindigkeit" kann vorliegend die Umlauf- bzw. Umfangsgeschwindigkeit des entsprechenden Endloselementes verstanden werden. Diese Umlaufgeschwindigkeit überträgt sich unter Annahme eines schlupffreien Fördervorgangs gleichermaßen auf die jeweilige Papierbahn, so dass unterschiedliche Fördergeschwindigkeiten zwischen den Endloselementenpaaren in der Transportrichtung unterschiedliche Geschwindigkeiten der Papierbahnen bewirken. In anderen Worten kann dadurch ein Stauchen oder Straffen der Papierbahnen in der Transportrichtung bewirkt werden.

In einer weiteren Ausgestaltung der Verpackungsmaschine gemäß der Erfindung kann vorgesehen sein, dass bei geschlossener Quertrennschweißeinrichtung die erste Fördergeschwindigkeit der Paare von Endloselementen der Zuführeinrichtungen größer als null ist und die zweite Fördergeschwindigkeit der ersten Paare von Endloselementen der Längstrennschweißeinrichtungen gleich null ist.

Es ist bekannt, dass Quertrennschweißeinrichtungen einen Oberstempel und einen Unterstempel aufweisen, die sich aufeinander zu bewegen, so dass sie sich in der Folienbahnebene (hier vorliegend Papierbahnebene) treffen und die Folien (hier vorliegend Papierbahnen) trennen und verschweißen. Eine derartige Quertrennschweißeinrichtung ist beispielsweise in der Druckschrift DE 10 2017 131 026 A1 gezeigt.

Der Begriff "geschlossene Quertrennschweißeinrichtung" ist vorliegend nicht auf einen Zustand eingeschränkt, in dem Ober- und Unterstempel in der Papierbahnebene aneinander anliegen und die Papierbahnen zwischen sich einklemmen, sondern umfasst auch solche Zustände, in denen sich Ober- und Unterstempel zwar aufeinander zu bewegen, aber noch nicht in der Papierbahnebene angeordnet sind.

In anderen Worten stellt sich bei geschlossener Quertrennschweißeinrichtung in den Zuführeinrichtungen eine erste Fördergeschwindigkeit der Paare von Endloselementen ein, die größer als null ist, während die ersten Paare von Endloselementen der Längstrennschweißeinrichtungen "stillstehen". Dementsprechend stoppen auch die aufeinanderliegenden Papierbahnen, die zwischen dem jeweiligen ersten Paar von Endloselementen der Längstrennschweißeinrichtungen in der Papierbahnebene eingeklemmt sind. Da die Quertrennschweißeinrichtung in der Transportrichtung zwischen den Zuführeinrichtungen und den Längstrennschweißeinrichtungen angeordnet ist, wird somit stromaufwärts der Quertrennschweißeinrichtung Papier nachgeschoben bzw. nachgeführt. Die Papierbahnen werden infolgedessen in der Transportrichtung entspannt, wodurch ein rissfreies Quertrennschweißen der Papierbahnen gewährleistet werden kann.

In einer weiteren Ausgestaltung der Verpackungsmaschine gemäß der Erfindung kann vorgesehen sein, dass bei geöffneter Quertrennschweißeinrichtung die zweite Fördergeschwindigkeit der ersten Paare von Endloselementen der Längstrennschweißeinrichtungen größer als die erste Fördergeschwindigkeit der Paare von Endloselementen der Zuführeinrichtungen ist, wobei die erste Fördergeschwindigkeit der Paare von Endloselementen der Zuführeinrichtungen größer als null ist.

Unter dem Begriff "geöffnete Quertrennschweißeinrichtung" kann vorliegend ein Zustand verstanden werden, in dem ein Ober- und Unterstempel der Quertrennschweißeinrichtung derart voneinander beabstandet sind, dass sie nicht in der Papierbahnebene aneinander anliegen. In anderen Worten liegen die Papierbahnen in diesem geöffneten Zustand nicht an dem Ober- und Unterstempel an, was einem Durchlaufbetrieb entspricht.

In anderen Worten stellt sich bei geöffneter Quertrennschweißeinrichtung in den Zuführeinrichtungen eine erste Fördergeschwindigkeit der Paare von Endloselementen ein, die größer als null ist, während die ersten Paare von Endloselementen der Längstrennschweißeinrichtungen mit einer zweiten Geschwindigkeit angetrieben sind, die wiederum größer als die erste Fördergeschwindigkeit ist. Ein Vorteil dieser Ausgestaltung ist, dass sich im Durchlaufbetrieb in den Papierbahnen ein Geschwindigkeitsgradient zwischen der Zuführeinrichtung und der Längstrennschweißeinrichtung ergibt, der stromabwärts der Zuführeinrichtung in der Transportrichtung zunimmt und die Papierbahnen in der Transportrichtung strafft. Wenn das Papier im Dauerbetrieb nicht gestrafft würde, wäre die Gefahr einer Rissbildung in den Papierbahnen, beispielsweise infolge einer Faltenbildung, erheblich größer.

In einer weiteren Ausgestaltung der Verpackungsmaschine gemäß der Erfindung kann vorgesehen sein, dass das erste Endloselement und das zweite Endloselement des Paars von Endloselementen der jeweiligen Zuführeinrichtung in der Transportrichtung zueinander geneigt sind.

Bei bekannten Serienpackmaschinen ist es üblich, dass das Packgut zwischen der oberen und der unteren Folien- bzw. Papierbahn angeordnet wird. Die obere und die untere Papierbahn sind somit auf gegenüberliegenden Seiten des Packguts angeordnet. Erfindungsgemäß laufen die obere und die untere Papierbahn aufgrund der relativen Neigung des ersten und des zweiten Endloselements in der Transportrichtung stromabwärts ebenfalls aufeinander zu. Der Neigungswinkel zwischen dem ersten und dem zweiten Endloselement der Paare von Endloselementen der jeweiligen Zuführeinrichtung ist vorzugsweise konstant. Unter "zueinander geneigt" ist also zu verstehen, dass der vertikale Abstand der Endloselemente voneinander in der Transportrichtung abnimmt.

In einer weiteren Ausgestaltung der Verpackungsmaschine gemäß der Erfindung kann vorgesehen sein, dass die Paare von Endloselementen der Zuführeinrichtungen gemeinsam höhenverstellbar sind.

Es versteht sich von selbst, dass sich infolge der Höhenverstellung der Paare von Endloselementen der Zuführeinrichtungen die Papierbahnebene, in der die obere und die untere Papierbahn zusammenlaufen und durch die Verpackungsmaschine transportiert und verarbeitet werden, ebenfalls in der Höhe verschieben kann. Auf diese Weise kann die Verpackungsmaschine auch Packgutstücke unterschiedlicher Höhe berücksichtigen und verarbeiten. Die Höhenverstellung der Zuführeinrichtungen kann grundsätzlich manuell, z.B. mittels eines betätigbaren Kurbelelements, oder automatisch bzw. motorbetrieben realisiert werden. Optional kann zu diesem Zweck auch die Höhe des zu verpackenden Packguts durch geeignete Sensorik erfasst werden, um die Präzision der Höhenverstellung weiter zu erhöhen.

Um trotz der Höhenverstellung der Zuführeinrichtungen eine möglichst horizontale bzw. ebene Zufuhr der Papierbahnen in die Quertrennschweißeinrichtung gewährleisten zu können, kann selbstverständlich auch die Quertrennschweißeinrichtung höhenverstellbar ausgebildet sein. Alternativ kann die Quertrennschweißeinrichtung jedoch auch dazu ausgebildet sein, lediglich die Trennschweißebene, in der Ober- und Unterstempel sich treffen, zu verstellen. Optional können zu diesem Zweck auch die Längstrennschweißeinrichtungen höhenverstellbar ausgebildet sein.

In einer weiteren Ausgestaltung der Verpackungsmaschine gemäß der Erfindung kann vorgesehen sein, dass die Steuereinrichtung dazu ausgebildet ist, die erste Antriebseinrichtung derart zu steuern, dass die erste Fördergeschwindigkeit oder ein Förderzeitraum der Paare von Endloselementen der Zuführeinrichtungen an eine Höhenverstellung oder Höheneinstellung der Zuführeinrichtungen angepasst ist, wenn die zweite Fördergeschwindigkeit null ist. Dadurch kann eiine Kollision der oberen oder der unteren Papierbahn mit der Transporteinrichtung zu vermeiden.

Damit eine Quertrennschweißeinrichtung die Enden der Umverpackung zusammenführen und quertrennschweißen kann, muss der Unterstempel der Quertrennschweißeinrichtung von unten (d.h. von unterhalb einer Auflageebene des Packguts auf der Transporteinrichtung) durch die Transporteinrichtung nach oben geführt werden. In der Regel wird hierzu zwischen zwei aufeinanderfolgenden Transporteinrichtungen ein Spalt freigelassen, durch den der Unterstempel nach oben bewegt werden kann. Durch diesen Spalt erstreckt sich stromaufwärts der Quertrennschweißeinrichtung auch die untere Papierbahn, um schließlich mit der oberen Papierbahn in der Papierbahnebene zusammenzulaufen.

Wie voranstehend erläutert, sind die Paare von Endloselementen der Zuführeinrichtungen gemeinsam höhenverstellbar, um unterschiedliche Packguthöhen bewältigen zu können. Da der Neigungswinkel zwischen dem ersten und dem zweiten Endloselement vorzugsweise konstant ist, besteht infolge der Höhenverstellung der Zuführeinrichtungen, z.B. von einem ersten Packgut auf ein höheres zweites Packgut, und der damit verbundenen Höhenverschiebung der Papierbahnebene die Gefahr einer Kollision zwischen der unteren Papierbahn und einer Kante der ersten der beiden aufeinanderfolgenden Transporteinrichtungen. Um eine derartige Kollision zu vermeiden, wird erfindungsgemäß die erste Fördergeschwindigkeit oder der Förderzeitraum der Paare von Endloselementen der Zuführeinrichtungen angepasst, im vorliegenden Beispiel also erhöht. Dadurch kann die untere Papierbahn in der Transportrichtung entspannt wird und relativ zu dem vorherigen Zustand eine Beschleunigung erfährt. Auf diese Weise kann die untere Papierbahn um die Kante herumgeführt werden. Des Weiteren wird der unteren als auch der oberen Papierbahn durch das "Nachschieben" mittels der Zuführeinrichtung genügend Spiel bereitgestellt, dass sich die Papierbahnen um das Packgut legen können und ein Schlie-ßen der Quertrennschweißeinrichtung keine der Papierbahnen zerreißt.

In einer weiteren Ausgestaltung der Verpackungsmaschine gemäß der Erfindung kann vorgesehen sein, dass das Paar von Endloselementen der ersten und der zweiten Zuführeinrichtung jeweils in einer Umlaufebene umläuft, wobei die Umlaufebenen der Paare von Endloselementen jeweils senkrecht zu der Papierbahnebene verlaufen und zwischen sich, insbesondere orthogonal zu der Transportrichtung, einen Abstand definieren.

Mit anderen Worten ist in der vorgeschlagenen Anordnung vorgesehen, dass die Umlaufebene des Paars von Endloselementen der ersten Zuführeinrichtung und die Umlaufebene des Paars von Endloselementen der zweiten Zuführeinrichtung parallel zueinander und parallel zu der Transportrichtung ausgerichtet sind, wobei die jeweilige Ebene mit der Papierbahnebene einen rechten Winkel einschließt. Zwischen den Ebenen definiert sich demnach ein Breite bzw. ein Abstand.

In einer weiteren Ausgestaltung der Verpackungsmaschine gemäß der Erfindung kann vorgesehen sein, dass ein Abstand senkrecht zu der Transportrichtung zwischen den Paaren von Endloselementen der Zuführeinrichtungen verstellbar ist.

Mit anderen Worten ist die erfindungsgemäße Verpackungsmaschine breitenverstellbar, so dass eine Breite der Umverpackung an Packgüter unterschiedlicher Form und Breite angepasst werden kann. Konstruktiv kann die Breite zwischen den beiden Ebenen beispielsweise mittels einer Spindel, die sich zwischen der ersten und der zweiten Zuführeinrichtung erstreckt, verstellbar sein. Eine derartige Spindel kann zudem sehr einfach mittels eines Endloselements mit der ersten Antriebseinrichtung gekoppelt werden. Alternativ ist es jedoch auch möglich, mittels eines Kurbelelements die Breite zwischen den Ebenen zu verstellen.

In einer weiteren Ausgestaltung der Verpackungsmaschine gemäß der Erfindung kann vorgesehen sein, dass das mindestens eine Paar von umlaufenden Endloselementen zum Fördern der Papierbahnen über jeweils mindestens zwei Rollen läuft, wobei die erste und die zweite Zuführeinrichtung des Weiteren jeweils ein erstes Förderelement und ein zweites Förderelement aufweist, wobei die ersten Förderelemente und die ersten Endloselemente der Paare von Endloselementen der Zuführeinrichtungen die obere Papierbahn an zwei bezüglich der Transportrichtung entgegengesetzten Längsseiten der oberen Papierbahn zwischen sich einziehen, insbesondere und in einer oberen Papierbahnebene führen, und wobei die zweiten Förderelemente und die zweiten Endloselemente der Paare von Endloselementen der Zuführeinrichtungen die untere Papierbahn an zwei bezüglich der Transportrichtung entgegengesetzten Längsseiten der unteren Papierbahn zwischen sich einziehen, insbesondere und in einer unteren Papierbahnebene führen.

Mit anderen Worten ist in der vorgeschlagenen Anordnung vorgesehen, dass nicht etwa die angetriebenen Paare von Endloselementen der Zuführeinrichtungen die obere Papierbahn und die untere Papierbahn zwischen sich klemmen und führen, sondern dass zu jedem Endloselement der Zuführeinrichtungen ein komplementäres Förderelement vorgesehen ist. Die Förderelemente sind vorzugsweise nicht angetrieben.

In einer weiteren Ausgestaltung der Verpackungsmaschine gemäß der Erfindung kann vorgesehen sein, dass das erste Förderelement als erste Rollenanordnung mit mindestens zwei Rollen zum Führen der oberen Papierbahn ausgebildet ist, und dass das zweite Förderelement als zweite Rollenanordnung mit mindestens zwei Rollen zum Führen der unteren Papierbahn ausgebildet ist.

Die Verwendung von derartigen Rollenanordnungen anstelle von zusätzlichen Gegen-Endloselementen ermöglicht eine einfachere und kompaktere Bauweise der Zuführeinrichtungen.

In einer weiteren Ausgestaltung der Verpackungsmaschine gemäß der Erfindung kann vorgesehen sein, dass eine Abrollrichtung der Rollen der ersten Rollenanordnung der jeweiligen Zuführeinrichtung und eine Abrollrichtung der Rollen der zweiten Rollenanordnung der jeweiligen Zuführeinrichtung relativ zu der Transportrichtung jeweils unter einem Rollenwinkel nach außen verläuft.

Beim Durchlaufen der Zuführeinrichtungen wird durch die erfindungsgemäße Schrägstellung der Rollen der ersten Rollenanordnung eine Querstraffung der oberen Papierbahn erzielt und durch die Schrägstellung der Rollen der zweiten Rollenanordnung eine Querstraffung der unteren Papierbahn erzielt. Je nach Art und Oberflächenbeschaffenheit der Endloselemente können die Rollen der jeweiligen Rollenanordnung beschichtet sein, so dass ein rutschfestes Erfassen und Halten der Papierbahnen sichergestellt ist. Weist beispielsweise das Endloselement eine gummierte Oberfläche auf, so kann es vorteilhaft sein, die Oberfläche der komplementären Rollen gerändelt auszubilden, um sicherzustellen, dass durch die aufgebrachte Querkraft die Papierbahnen nicht zwischen den Förderelementen und den Endloselementen verrutschen.

In einer weiteren Ausgestaltung der Verpackungsmaschine gemäß der Erfindung kann vorgesehen sein, dass die erste und die zweite Zuführeinrichtung an den entgegengesetzten Längsseiten der Papierbahnen jeweils mindestens ein in der Transportrichtung zwischen den Paaren von Endloselementen und der Quertrennschweißeinrichtung angeordnetes Rollenpaar aufweist, wobei eine erste Rolle und eine zweite Rolle des jeweiligen Rollenpaars an zwei bezüglich der Papierbahnebene entgegengesetzten Seiten der aufeinanderliegenden Papierbahnen angeordnet sind.

Ein derartig angeordnetes Rollenpaar verbessert die Zuführung der oberen Papierbahn und der unteren Papierbahn in die Quertrennschweißeinrichtung und ermöglicht so ein qualitativ besseres Quertrennschweißen der Papierbahnen. Insbesondere wird so sichergestellt, dass die Quertrennschweißeinrichtung, bzw. deren Oberstempel und Unterstempel, die obere Papierbahn und die untere Papierbahn verschweißt, während diese im Wesentlichen horizontal und in der Papierbahnebene läuft. Beispielsweise kann die erste Rolle des Rollenpaars oberhalb der Papierbahnebene angeordnet sein und die zweite Rolle des Rollenpaars unterhalb der Papierbahnebene angeordnet sein, oder umgekehrt.

In einer weiteren Ausgestaltung der Verpackungsmaschine gemäß der Erfindung kann vorgesehen sein, dass die erste Rolle und die zweite Rolle des jeweiligen Rollenpaars die obere Papierbahn und die untere Papierbahn zwischen sich einziehen und in der Papierbahnebene führen.

In einer weiteren Ausgestaltung der Verpackungsmaschine gemäß der Erfindung kann vorgesehen sein, dass eine Abrollrichtung des Rollenpaars der jeweiligen Zuführeinrichtung parallel zu der Transportrichtung ausgerichtet ist.

Mit anderen Worten ist in der vorgeschlagenen Anordnung vorgesehen, dass die Rotationsachsen der Rollen des jeweiligen Rollenpaars parallel zu der Papierbahnebene und orthogonal zu der Transportrichtung ausgerichtet sind. Alternativ kann vorgesehen sein, dass die Abrollrichtung wenigstens einer Rolle des Rollenpaars der jeweiligen Zuführeinrichtung relativ zu der Transportrichtung unter einem Vorspannrollenwinkel nach außen verläuft. Durch ein solches Vorspannsystem kann eine gewisse Querstraffung der Papierbahnen vor dem Eintreten in die Quer- bzw. Längstrennschweißeinrichtung erzielt werden. Beispielsweise kann vorgesehen sein, dass eine Abrollrichtung der ersten Rolle des jeweiligen Rollenpaars parallel zu der Transportrichtung ausgerichtet ist, wohingegen eine Abrollrichtung der zweiten Rolle relativ zu der Transportrichtung unter einem Vorspannrollenwinkel nach außen verläuft. Alternativ können jedoch auch beide Rollen des jeweiligen Rollenpaars relativ zu der Transportrichtung unter einem Vorspannrollenwinkel nach außen verlaufen.

Um sicherzustellen, dass die Rollen die Papierbahnen sicher einziehen und die Papierbahnen nicht in den Rollen verrutschen, kann eine Rolle des jeweiligen Rollenpaars beispielsweise eine gummierte Oberfläche aufweisen, wohingegen die andere Rolle desselben Rollenpaars beispielsweise eine gerändelte Oberfläche aufweisen kann, die vorzugsweise aus einem Metall besteht.

In einer weiteren Ausgestaltung der Verpackungsmaschine gemäß der Erfindung kann vorgesehen sein, dass die Quertrennschweißeinrichtung einen ersten Stempel und einen zweiten Stempel aufweist, wobei der erste Stempel zwei voneinander durch einen ersten Spalt beabstandete Beheizungseinrichtungen aufweist, deren dem zweiten Stempel zugewandte Flächen jeweils eine Querschweißfläche ausbildet, wobei die Querschweißflächen in einer gemeinsamen Schweißflächenebene parallel zu der Papierbahnebene liegen, wobei der zweite Stempel zwei voneinander durch einen zweiten Spalt beabstandete Druckaufnahmeeinrichtungen aufweist, wobei die Druckaufnahmeeinrichtungen eine dem ersten Stempel zugewandte Stützfläche ausbilden, wobei der zweite Stempel ein in dem zweiten Spalt angeordnetes Trennmesser aufweist, wobei der erste Spalt des ersten Stempels gegenüberliegend zu dem zweiten Spalt des zweiten Stempels angeordnet ist, wobei der erste und der zweite Stempel orthogonal zu der Papierbahnebene relativ zueinander bewegbar sind.

Dabei kann der erste Stempel der Oberstempel oder der Unterstempel sein und der zweite Stempel der jeweils andere von dem Oberstempel und dem Unterstempel. Vorzugsweise ist jedoch der erste Stempel der Oberstempel und der zweite Stempel der Unterstempel.

Es kann jede der Druckaufnahmeeinrichtungen in dem zweiten Stempel parallel zu der Trennspaltebene bewegbar, insbesondere federnd, gelagert sein. Das Trennmesser ist dann fest in dem zweiten Stempel gelagert. Das Trennmesser ist nicht in dem zweiten Stempel bewegbar. Die Druckaufnahmeeinrichtungen bewegen sich somit relativ zu dem Trennmesser bei Kraftbeaufschlagung entgegen der Federkraft ihrer federnden Lagerung in der Trennschweißebene. Alternativ kann auch vorgesehen sein, dass jede der Druckaufnahmeeinrichtungen in dem zweiten Stempel parallel zu der Trennspaltebene feststehend gelagert ist. Das Trennmesser ist dann bewegbar in dem zweiten Stempel gelagert. Das Trennmesser ist in dem zweiten Stempel bewegbar, beispielsweise mittels einer Aktuierungseinrichtung. Diese kann eine pneumatische Aktuierungseinrichtung sein. Auf diese Weise kann die Bewegung des Trennmessers aktiv gesteuert werden, beispielsweise über die Steuerungseinrichtung der Verpackungsmaschine. Das Trennmesser tritt somit entweder aufgrund der federnden Lagerung oder der Bewegung mittels der Aktuierungseinrichtung aus dem zweiten Spalt hervor und in den gegenüberliegenden ersten Spalt des ersten Stempels ein. Das Durchtrennen der Papierbahnen erfolgt dabei nicht über die gesamte Breite der aufeinanderliegenden Papierbahnen. Das Durchtrennen erfolgt vorzugsweise derart, dass auf beiden Seiten der Papierbahnen ein durchgehender Streifen stehenbleibt, der zu Förderung durch die Längstrennschweißeinrichtungen genutzt und vorzugsweise erst in der Längstrenneinrichtung abgetrennt wird.

In einer weiteren Ausgestaltung der Verpackungsmaschine gemäß der Erfindung kann vorgesehen sein, dass der erste Stempel und der zweite Stempel derart orthogonal zu der Papierbahnebene relativ zueinander bewegbar sind, dass die in der Transportrichtung stromaufwärts angeordnete Querschweißfläche und die in der Transportrichtung stromaufwärts angeordnete Druckaufnahmeeinrichtung aneinander anliegen, und dass die in der Transportrichtung stromabwärts angeordnete Querschweißfläche und die in der Transportrichtung stromabwärts angeordnete Druckaufnahmeeinrichtung aneinander anliegen.

Die Druckaufnahmeeinrichtungen werden also durch die zwei Beheizungseinrichtungen jeweils mit einer Kraft beaufschlagt. Diese wirkt im Fall der federnden Lagerung entgegen der Federkraft ihrer federnden Lagerung wirkt. Auf diese Weise kann sichergestellt werden, dass die Folienbahnen mechanisch mittels des Trennmessers durchtrennt und, insbesondere gleichzeitig, thermisch miteinander versiegelt bzw. verschweißt werden.

In einer weiteren Ausgestaltung der Verpackungsmaschine gemäß der Erfindung kann vorgesehen sein, dass die Druckaufnahmeeinrichtungen derart in dem zweiten Stempel federnd gelagert sind, dass das Trennmesser in die Stützfläche zurückgezogen angeordnet ist, wenn die Stützfläche und die Querschweißflächen voneinander beabstandet sind, und dass das Trennmesser aus der Stützfläche herausragt und die in den ersten Spalt hineinragt, wenn die Querschweißflächen jeweils eine Siegelkraft auf die Stützfläche beaufsch lagt.

Auf diese Weise kann sichergestellt werden, dass die Folienbahnen mechanisch mittels des Trennmessers durchtrennt und, insbesondere gleichzeitig, thermisch miteinander versiegelt bzw. verschweißt werden.

In einer weiteren Ausgestaltung der Verpackungsmaschine gemäß der Erfindung kann vorgesehen sein, dass die Verpackungsmaschine des Weiteren zumindest eine die obere Papierbahn tragende obere Abwickelrolle und zumindest eine die untere Papierbahn tragende untere Abwickelrolle aufweist, insbesondere wobei die obere und die untere Abwickelrolle jeweils abbremsbar ist.

Auf diese Weise kann sichergestellt werden, dass die obere und die untere Papierbahn unter Beibehaltung der Längsstraffung entlang der Vorschubrichtung der jeweiligen Papierbahn in die Zuführeinrichtungen geführt wird.

In einer weiteren Ausgestaltung der Verpackungsmaschine gemäß der Erfindung kann vorgesehen sein, dass die Verpackungsmaschine des Weiteren eine verstellbare Pendelrollenbaugruppe zum Führen jeder der oberen und der unteren Papierbahn aufweist.

Die Pendelbaugruppe weist vorzugsweise eine Anzahl von senkrecht zu der Transportrichtung angeordneten oberen Umlenkrollen und eine Anzahl von senkrecht zu der Transportrichtung angeordneten unteren Umlenkrollen auf. Die obere und die untere Papierbahn werden jeweils abwechselnd zwischen der Pendelbaugruppe und einer komplementären Gegenrollenbaugruppe, die ebenfalls senkrecht zu der Transportrichtung angeordnet ist, geführt. Die Pendelbaugruppe ist relativ zu der Gegenrollenbaugruppe verstellbar. Auf diese Weise kann die jeweilige Papierbahn beispielsweise bei stillstehender Maschine nachgestrafft und glattgezogen werden. Die Pendelrollenbaugruppe kann manuell oder motorisch angetrieben sein.

In einer weiteren Ausgestaltung der Verpackungsmaschine gemäß der Erfindung kann vorgesehen sein, dass die Verpackungsmaschine des Weiteren mindestens ein oberes Einzugsrollenpaar und/oder mindestens eine obere Einzugsrolle zum Abwickeln der oberen Papierbahn von der oberen Abwickelrolle und mindestens ein unteres Einzugsrollenpaar und/oder mindestens eine untere Einzugsrolle zum Abwickeln der unteren Papierbahn von der unteren Abwickelrolle aufweist, wobei das obere und das untere Einzugsrollenpaar in der Transportrichtung zwischen der Pendelrollenbaugruppe und den Zuführeinrichtungen angeordnet sind.

Dabei ist eine Abrollrichtung der Einzugsrollenpaare parallel zu der Transportrichtung angeordnet. Die Einzugsrollen des oberen Einzugsrollenpaars sind dazu ausgebildet, die obere Papierbahn zwischen sich einzuziehen und zu führen. Die Einzugsrollen des unteren Rollenpaars sind dazu ausgebildet, die untere Papierbahn zwischen sich einzuziehen und zu führen. Die Einzugsrollen erstrecken sich vorzugsweise über die gesamte Breite der jeweiligen Papierbahn.

In einer weiteren Ausgestaltung der Verpackungsmaschine gemäß der Erfindung kann vorgesehen sein, dass die Verpackungsmaschine des Weiteren eine dritte Antriebseinrichtung zum Antreiben des oberen und des unteren Einzugsrollenpaars und/oder der mindestens einen oberen und unteren Einzugsrolle aufweist.

Auf diese Weise kann sichergestellt werden, dass die angetriebenen Einzugsrollenpaare die obere und die untere Papierbahn jeweils von der abbremsbaren Abzugsrolle abwickeln. Insbesondere kann sichergestellt werden, dass die Papierbahnen bereits stromaufwärts der Zuführeinrichtungen angetrieben sind, so dass diese längsgestrafft durch die Pendelbaugruppe geführt werden können.

In einer weiteren Ausgestaltung der Verpackungsmaschine gemäß der Erfindung kann vorgesehen sein, dass die Steuereinrichtung des Weiteren dazu ausgebildet ist, die dritte Antriebseinrichtung unabhängig von der ersten und der zweiten Antriebseinrichtung zu steuern.

Mit anderen Worten ist die Steuereinrichtung dazu ausgebildet, die dritte Antriebseinrichtung derart zu steuern, dass die Einzugsrollenpaare mit einer dritten Fördergeschwindigkeit angetrieben sind. Auf diese Weise kann beispielsweise sichergestellt werden, dass eine Vorschubgeschwindigkeit bzw. Fördergeschwindigkeit der jeweiligen Papierbahnen im Durchlaufbetrieb (insbesondere bei geöffneter Quertrennschweißeinrichtung) ausgehend von den Abwickelrollen bis hin zu den Längstrennschweißeinrichtungen stromabwärts in der Transportrichtung sukzessive zunimmt. Ein weiterer Vorteil dieser Ausgestaltung ist, dass beispielsweise bei geschlossener Quertrennschweißeinrichtung die erste und die dritte Antriebseinrichtung angetrieben sein kann, ohne dass dabei die zweite Antriebseinrichtung angetrieben ist. Auf diese Weise kann wie voranstehend erläutert stromaufwärts der Quertrennschweißeinrichtung Papier nachgeführt werden.

Es kann insbesondere vorgesehen sein, dass die dritte Antriebseinrichtung einen dritten Motor aufweist. Der dritte Motor ist vorzugsweise verschieden von dem ersten und dem zweiten Motor. Die Steuereinrichtung kann insbesondere dazu ausgebildet sein, den dritten Motor, den ersten Motor und den zweiten Motor zu steuern. Es kann insbesondere vorgesehen sein, dass die dritte Antriebseinrichtung einen dritten Motor aufweist, wobei der dritte Motor verschieden von dem ersten und dem zweiten Motor ist.

In einer Ausgestaltung des Verfahrens gemäß dem zweiten Aspekt der Erfindung kann vorgesehen sein, dass das Schweißrad mittels eines Vorspannelements in die Ruheposition vorgespannt wird, und wobei das Schweißrad mittels einer Verstelleinrichtung gegen eine Kraft des Vorspannelements in die Arbeitsposition bewegt wird.

Die Ausgestaltung der Verstelleinrichtung und des Vorspannelements kann geeignet gewählt sein. Beispielsweise kann eine mechanische Umsetzung gewählt werden, in der das Vorspannelement ein Federelement ist und die Verstelleinrichtung ein Aktuator, beispielsweise. pneumatisch betrieben. Es kann auch eine elektromagnetische Ausgestaltung gewählt werden, in der das Vorspannelement durch Permanentmagneten bereitgestellt ist und die Verstelleinrichtung durch einen Elektromagneten bzw. eine mit Strom beaufschlagbare Spule. Es kann auch eine Kombination dieser Elemente gewählt werden, also eine Kombination mechanischer und elektromagnetischer Elemente. Jedenfalls ist das Schweißrad mittels des Vorspannelements in die Ruheposition vorgespannt. Dies bewirkt, dass beispielsweise bei einem Stromausfall das Schweißrad automatisch in die Ruheposition springt. Bei einem Notaus aus der Maschine erfolgt daher keine Beschädigung in der Papierbahn. Des Weiteren wird auf diese Weise bewirkt, dass während des Vorgangs des Quertrennschweißens, bei dem die Papierbahnen innerhalb der Längstrennschweißeinrichtung nicht in Transportrichtung gefördert werden, das Schweißrad in die Ruheposition bewegt wird, so dass während des Quertrennschweißvorgangs ebenfalls keine Beschädigung der Papierbahnen durch Wärmeeintrag erfolgt.

In einer weiteren Ausgestaltung des Verfahrens gemäß dem zweiten Aspekt der Erfindung kann vorgesehen sein, dass während des Schritts des Förderns ein Trennen der Papierbahnen parallel zu einer Förderrichtung der Papierbahnen durch das mindestens eine erste Paar von umlaufenden Endloselementen erfolgt.

Auf diese Weise wird zusätzlich zu dem Verschweißen bzw. Verkleben bzw. Versiegeln der Papierbahnen ein seitlicher Papierüberstand abgetrennt.

In einer weiteren Ausgestaltung des Verfahrens gemäß dem zweiten Aspekt der Erfindung kann vorgesehen sein, dass das Trennen mittels eines rotierenden Trennmessers erfolgt, insbesondere wobei das rotierende Trennmesser von derselben Antriebseinrichtung wie das mindestens eine erste Paar von umlaufenden Endloselementen angetrieben wird.

Auf diese Weise erfolgt eine Trennung der Papierbahnen, die ein Einreißen oder Beschädigen der Papierbahnen aufgrund des Mitrotierens des Trennmessers vermeidet.

In einer weiteren Ausgestaltung des Verfahrens gemäß dem zweiten Aspekt der Erfindung kann vorgesehen sein, dass die Verpackungsmaschine eine Transporteinrichtung zum Transportieren eines Packguts in einer Transportrichtung, eine Quertrennschweißeinrichtung zum Verschweißen einer oberen und einer unteren Papierbahn quer zu der Transportrichtung, eine erste und eine zweite Zuführeinrichtung zum Zuführen der Papierbahnen in die Quertrennschweißeinrichtung, wobei die erste und die zweite Zuführeinrichtung jeweils mindestens ein Paar von umlaufenden, insbesondere über jeweils mindestens zwei Rollen laufenden, Endloselementen zum Fördern der Papierbahnen aufweist, wobei ein erstes Endloselement des Paars von Endloselementen zum Fördern der oberen Papierbahn ausgebildet ist und ein zweites Endloselement des Paars von Endloselementen zum Fördern der zweiten Papierbahn ausgebildet ist, eine erste und eine zweite Längstrennschweißeinrichtung zum Verschweißen der Papierbahnen parallel zu der Transportrichtung an zwei entgegengesetzten Längsseiten der Papierbahnen, wobei jede der ersten und der zweiten Längstrennschweißeinrichtung mindestens ein erstes Paar von umlaufenden, insbesondere über jeweils mindestens zwei Rollen laufenden, Endloselementen aufweist, die die erste und die zweite Papierbahn an den zwei entgegengesetzten Längsseiten der Papierbahnen zwischen sich einziehen und in einer Papierbahnebene führen, und wobei die Quertrennschweißeinrichtung in der Transportrichtung stromaufwärts der ersten und der zweiten Längstrennschweißeinrichtung angeordnet ist, wobei die Paare von Endloselementen der Zuführeinrichtungen mit einer ersten Fördergeschwindigkeit und die ersten Paare von Endloselementen der Längstrennschweißeinrichtungen mit einer zweiten Fördergeschwindigkeit angetrieben werden, wobei sich die erste Fördergeschwindigkeit von der zweiten Fördergeschwindigkeit unterscheidet.

In einer weiteren Ausgestaltung des Verfahrens gemäß dem zweiten Aspekt der Erfindung kann vorgesehen sein, dass während des Schließens der Quertrennschweißeinrichtung die erste Fördergeschwindigkeit der Paare von Endloselementen der Zuführeinrichtungen größer als null ist und die zweite Fördergeschwindigkeit der ersten Paare von Endloselementen der Längstrennschweißeinrichtungen gleich null ist.

Auf diese Weise wird eine getaktete Quertrennschweißung bereitgestellt. Die Längstrennschweißeinrichtung fördert die Papierbahnen nicht weiter. Die Paare von Endloselementen der Zuführeinrichtungen schieben die Papierbahnen jedoch noch nach, während die Stempel der Quertrennschweißeinrichtung zusammenfahren. Auf diese Weise wird ein Zerreißen der Papierbahnen während des Quertrennschweißens vermieden.

In einer weiteren Ausgestaltung des Verfahrens gemäß dem zweiten Aspekt der Erfindung kann vorgesehen sein, dass während des Öffnens der Quertrennschweißeinrichtung die zweite Fördergeschwindigkeit der ersten Paare von Endloselementen der Längstrennschweißeinrichtungen größer als die erste Fördergeschwindigkeit der Paare von Endloselementen der Zuführeinrichtungen ist, wobei die erste Fördergeschwindigkeit der Paare von Endloselementen der Zuführeinrichtungen größer als null ist.

Auf diese Weise erhöht sich die Fördergeschwindigkeit der Papierbahnen in Transportrichtung. Es kann eine straffe Führung der Papierbahnen während des Durchlaufbetriebs bei geöffneter Quertrennschweißeinrichtung erreicht werden.

In einer weiteren Ausgestaltung des Verfahrens gemäß dem zweiten Aspekt der Erfindung kann vorgesehen sein, dass die Paare von Endloselementen der Zuführeinrichtungen gemeinsam höhenverstellt werden.

Insbesondere wenn eine maximale Packguthöhe verändert werden soll, kann diese Einstellung vorgenommen werden. Grundsätzlich aber auch denkbar, die Höhenverstellung vorzunehmen wenn sich eine Packguthöhe zwischen aufeinanderfolgenden Packgütern ändert.

In einer weiteren Ausgestaltung des Verfahrens gemäß dem zweiten Aspekt der Erfindung kann vorgesehen sein, dass erste Fördergeschwindigkeit der Paare von Endloselementen der Zuführeinrichtungen erhöht wird, wenn sich die Packguthöhe zwischen den zwei aufeinanderfolgenden Packgütern vergrößert oder wenn eine größere maximale Packguthöhe eingestellt wird.

Es kann auch alternativ oder kumulativ bei gleichbleibender Geschwindigkeit der Zeitraum, über den die erste Fördergeschwindigkeit der Paare von Endloselementen der Zuführeinrichtungen größer als null ist und die zweite Fördergeschwindigkeit der ersten Paare von Endloselementen der Längstrennschweißeinrichtungen gleich null ist, erhöht werden. Im Ergebnis wird dann ebenfalls eine größere Strecke der Papierbahnen nachgeschoben, wenn die Längstrennschweißeinrichtung die Papierbahnen nicht mehr fördert.

In einer weiteren Ausgestaltung des Verfahrens gemäß dem zweiten Aspekt der Erfindung kann vorgesehen sein, dass die erste Fördergeschwindigkeit der Paare von Endloselementen der Zuführeinrichtungen verringert wird, wenn sich die Packguthöhe zwischen den zwei aufeinanderfolgenden Packgütern verringert oder wenn eine kleinere maximale Packguthöhe eingestellt wird.

Es kann auch alternativ oder kumulativ bei gleichbleibender Geschwindigkeit der Zeitraum, über den die erste Fördergeschwindigkeit der Paare von Endloselementen der Zuführeinrichtungen größer als null ist und die zweite Fördergeschwindigkeit der ersten Paare von Endloselementen der Längstrennschweißeinrichtungen gleich null ist, verringert werden. Im Ergebnis wird dann ebenfalls eine geringere Strecke der Papierbahnen nachgeschoben, wenn die Längstrennschweißeinrichtung die Papierbahnen nicht mehr fördert.

In einer weiteren Ausgestaltung des Verfahrens gemäß dem zweiten Aspekt der Erfindung kann vorgesehen sein, dass die erste und die zweite Längstrennschweißeinrichtung jeweils mindestens eine Verschweißeinrichtung mit einem beheizbaren Schweißrad zum Verschweißen der Papierbahnen und einer Andrückbaugruppe zum Abstützen der Papierbahnen gegen das Schweißrad aufweist, wobei das Schweißrad zwischen einer Arbeitsposition, in der die Andrückbaugruppe an dem Schweißrad anliegt, und einer Ruheposition, in der das Schweißrad von den Andrückbaugruppe beabstandet ist, verstellbar ist, wobei das Schweißrad von der Arbeitsposition in die Ruheposition bewegt wird, sobald ein Fördern der Papierbahnen in den Längstrennschweißeinrichtungen gestoppt wurde, und wobei ein erneutes Bewegen des Schweißrades in die Arbeitsposition erfolgt, bevor ein erneutes Fördern der Papierbahnen durch die Längstrennschweißeinrichtungen erfolgt.

Auf diese Weise wird vermieden, dass das Schweißrad einen übermäßigen Wärmeeintrag in die Papierbahnen bewirkt, was deren Beschädigung oder Zerstörung bewirken kann.

In einer weiteren Ausgestaltung des Verfahrens gemäß dem zweiten Aspekt der Erfindung kann vorgesehen sein, dass die Verpackungsmaschine des Weiteren mindestens ein oberes Einzugsrollenpaar zum Abwickeln der oberen Papierbahn von einer oberen Abwickelrolle und mindestens ein unteres Einzugsrollenpaar zum Abwickeln der unteren Papierbahn von einer unteren Abwickelrolle aufweist, wobei die obere Papierbahn und die untere Papierbahn mittels der Einzugsrollenpaare in die Zuführeinrichtungen gefördert werden, wobei die Einzugsrollenpaare mit einer dritten Geschwindigkeit angetrieben werden, die kleiner als die erste Fördergeschwindigkeit der Paare von Endloselementen der Zuführeinrichtungen ist.

Auf diese Weise können durch die Verpackungsmaschine zumindest drei Geschwindigkeitsniveaus bereitgestellt werden, die sich in Transportrichtung erhöhen, so dass die Papierbahnen durch die gesamte Verpackungsmaschine hindurch gestrafft gefördert werden.

In einer weiteren Ausgestaltung des Verfahrens gemäß dem zweiten Aspekt der Erfindung kann vorgesehen sein, dass die erste und die zweite Längstrennschweißeinrichtung des Weiteren jeweils mindestens ein zweites Paar von über jeweils mindestens zwei Rollen laufende Endloselementen zum Führen der Papierbahnen in der Papierbahnebene aufweist, wobei die zweiten Paare von Endloselementen der Zuführeinrichtungen mit der zweiten Fördergeschwindigkeit der ersten Paare von Endloselementen der Längstrennschweißeinrichtungen angetrieben werden.

Auf diese Weise können die Papierbahnen in der Längstrennschweißeinrichtung mit der höchsten Geschwindigkeit gezogen werden. Die Endloselemente ermöglichen zudem ein Antreiben der Papierbahnen ohne die Papierbahnen zu beschädigen.

Es versteht sich, dass die voranstehend für die Verpackungsmaschine gemäß dem ersten Aspekt erläuterten Merkmale auch das Verfahren gemäß dem zweiten Aspekt ausgestalten können. Umgekehrt können die für das Verfahren gemäß dem zweiten Aspekt erläuterten Merkmale auch die Verpackungsmaschine gemäß dem ersten Aspekt ausgestalten.

Es versteht sich, dass die voranstehend genannten und die nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, welche durch die Patentansprüche bestimmt ist, zu verlassen.

Ausführungsformen der Erfindung sind in der Zeichnung dargestellt und werden in der nachfolgenden Beschreibung näher erläutert. Es zeigen:
- Fig. 1: eine schematische Ansicht einer Ausführungsform einer Verpackungsmaschine;
- Fig. 2: eine Seitenansicht einer Ausführungsform einer Zuführeinrichtung;
- Fig. 3: eine Draufsicht einer Ausführungsform der Zuführeinrichtungen;
- Fig. 4: eine isometrische Ansicht der Ausführungsform der Zuführeinrichtungen in Fig. 3;
- Fig. 5: eine schematische Ansicht zur Erläuterung der Zufuhr der oberen Papierbahn und der unteren Papierbahn;
- Fig. 6: eine schematische Seitenansicht des Oberstempels und des Unterstempels der Quertrennscheißeinrichtung;
- Fig. 7: eine Seitenansicht einer Längstrennschweißeinrichtung;
- Fig. 8: eine isometrische Ansicht der Längstrennschweißeinrichtung in Fig. 7;
- Fig. 9: eine schematische Draufsicht zur Erläuterung der Längstrennschweißeinrichtung;
- Fig. 10A: eine freigeschnittene Ansicht des Schweißrads;
- Fig. 10B: eine Seitenansicht des Schweißrads und der Andrückräder;
- Fig. 11: eine isometrische Ansicht einer Ausführungsform der Verpackungsmaschine;
- Fig. 12: eine Seitenansicht der Verpackungsmaschine in Fig. 11;
- Fig. 13: eine Draufsicht der Verpackungsmaschine in Fig. 11; und
- Fig. 14: ein schematisches Ablaufdiagramm eines Verfahrens zum Betreiben einer Verpackungsmaschine.

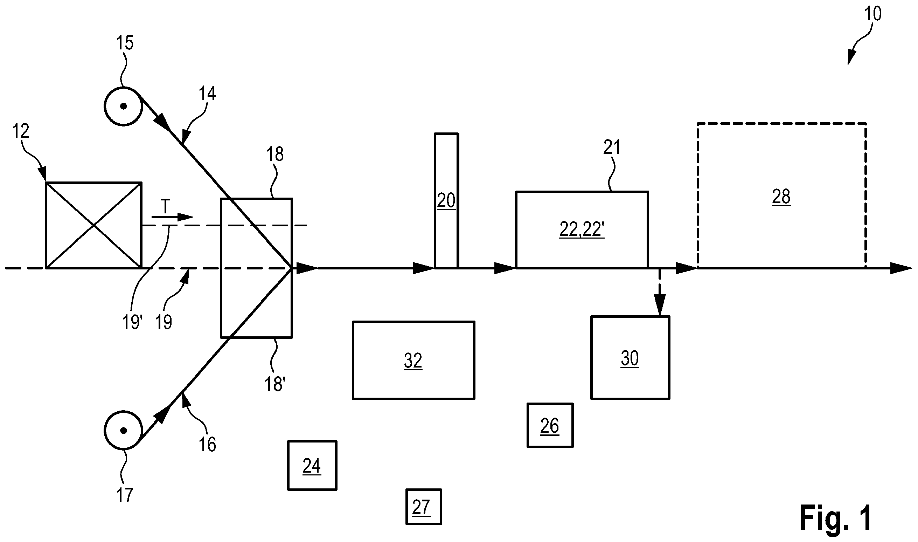

Fig. 1 zeigt eine Verpackungsmaschine 10 in einer schematischen Ansicht. Die Verpackungsmaschine 10 dient dazu, ein Packgut 12 mit einer Umverpackung zu versehen. Dazu wird das Packgut 12 in einer Transportrichtung T durch die Verpackungsmaschine 10 transportiert.

Das Packgut wird von der Verpackungsmaschine 10 mit einer oberen Papierbahn 14, die von einer oberen Vorrats- bzw. Abwickelrolle 15 abgewickelt wird, und einer unteren Papierbahn 16, die von einer unteren Vorrats- bzw. Abwickelrolle 17 abgewickelt wird, eingehüllt. Diese Art der Einhüllung entspricht dem Prinzip der Serienpackmaschine. Die obere Papierbahn 14 und die untere Papierbahn 16 werden dabei mittels einer ersten Zuführeinrichtung 18 und einer zweiten Zuführeinrichtung 18` zugeführt.

Die obere Papierbahn 14 und die untere Papierbahn 16 laufen in einer Papierbahnebene 19 zusammen, in der sie durch die Verpackungsmaschine 10 gefördert und verarbeitet werden. Die Papierbahnen 14, 16 sind vorzugsweise zueinander geneigt. Die Papierbahnebene 19 kann diejenige Ebene sein, in der beispielsweise eine Transporteinrichtung zum Transportieren des Packguts angeordnet ist. Die Papierbahnebene kann jedoch auch beispielsweise auf annähernd halber Höhe des Packguts 12 vorgesehen sein, wie mit einer Papierbahnebene 19' dargestellt ist. Insbesondere kann die Papierbahnebene 19 in ihrer Höhe verstellbar sein. Das Packgut 12 fährt somit in die in die aufeinander zulaufende obere Papierbahn 14 und untere Papierbahn 16 ein.

Das umhüllte Packgut 12 erreicht eine Quertrennschweißeinrichtung 20. Die Quertrennschweißeinrichtung 20 schließt die Papierbahnen 14, 16 quer zu der Transportrichtung zusammen und durchtrennt die Papierbahnen 14, 16 zumindest teilweise, so dass das Packgut 12 entlang der Schweißnaht keinen Kontakt mehr zu dem ihm vorhergehenden Packgut 12 hat.

Anschließend fährt das Packgut 12 durch eine erste Längstrennschweißeinrichtung 22 und eine zweite Längstrennschweißeinrichtung 22`, die dazu vorgesehen sind, die Papierbahnen 14, 16 an entgegengesetzten Seiten der Papierbahnen parallel zu der Transportrichtung T seitlich des Packguts 12 zusammenzuschweißen und einen seitlichen Papierüberstand der Papierbahnen 14, 16 abzutrennen. Die erste Längstrennschweißeinrichtung 22 und eine zweite Längstrennschweißeinrichtung 22' bilden ein Längstrennschweißsystem 21 aus. Schließlich wird auch die entgegengesetzt zu der Transportrichtung T weisende Seite des Packguts von der Quertrennschweißeinrichtung 20 verschweißt und beschnitten. Das Packgut 12 ist nun an allen vier Seiten verschweißt und beschnitten, so dass das Packgut 12 von einer Papierumhüllung vollständig umgeben ist.

Die Verpackungsmaschine 10 weist eine erste Antriebseinrichtung 24 zum Antreiben der ersten Zuführeinrichtung 18 und der zweiten Zuführeinrichtung 18' aus. Die Verpackungsmaschine 10 weist eine zweite Antriebseinrichtung 26 zum Antreiben der ersten Längstrennschweißeinrichtung 22 und der zweiten Längstrennschweißeinrichtung 22' auf. Insbesondere kann die Verpackungsmaschine 10 eine Steuereinrichtung 27 aufweisen. Die Steuereinrichtung 27 ist vorzugsweise dazu ausgebildet, die erste Antriebseinrichtung 24 und/oder die zweite Antriebseinrichtung 26 zu steuern.

Die Abfolge der Quertrennschweißeinrichtung 20 und der Längstrennschweißeinrichtungen 22, 22` ist lediglich beispielhaft in einer bevorzugten Konfiguration wiedergegeben. Die Abfolge dieser Einrichtungen kann auch anders sein, beispielsweise kann vorgesehen sein, die Quertrennschweißeinrichtung 20 nach den Längstrennschweißeinrichtungen 22, 22' anzuordnen.

Es kann optional vorgesehen sein, dass sich mindestens ein weiteres Modul 28 anschließt, das die miteinander verschweißten Papierbahnen 14, 16 bearbeitet. Des Weiteren kann ein Etikettierer vorgesehen sei (nicht dargestellt), der ein Etikett auf zumindest eine der Papierbahnen 14, 16 aufbringt. Optional kann beispielsweise eine Trennstation vorgesehen sein, die einen nach dem Durchlaufen der Längstrennschweißeinrichtungen 22, 22` noch vorhandenen Papierüberstand eng an dem Packgut anliegend in Längsrichtung abtrennt und erneut verschweißt. Dies kann insbesondere bei Packgütern mit wechselnder Breite vorgesehen sein. Auch eine Papierrückführung 30 kann vorgesehen sein, die dazu dient, den in den Längstrennschweißeinrichtungen 22, 22` abgetrennten Papierüberstand aufzunehmen, damit dieser wiederverwertet werden kann.

Die Verpackungsmaschine 10 weist Verstelleinrichtungen 32 auf, die dazu dienen, die Verpackungsmaschine 10 auf eine Höhe und eine Breite des Packguts 12 einzustellen. Mögliche Ausgestaltungen der Zuführeinrichtungen 18, 18', der Quertrennschweißeinrichtung 20 und der Längstrennschweißeinrichtungen 22, 22' werden mit Blick auf die Figuren noch näher erläutert.

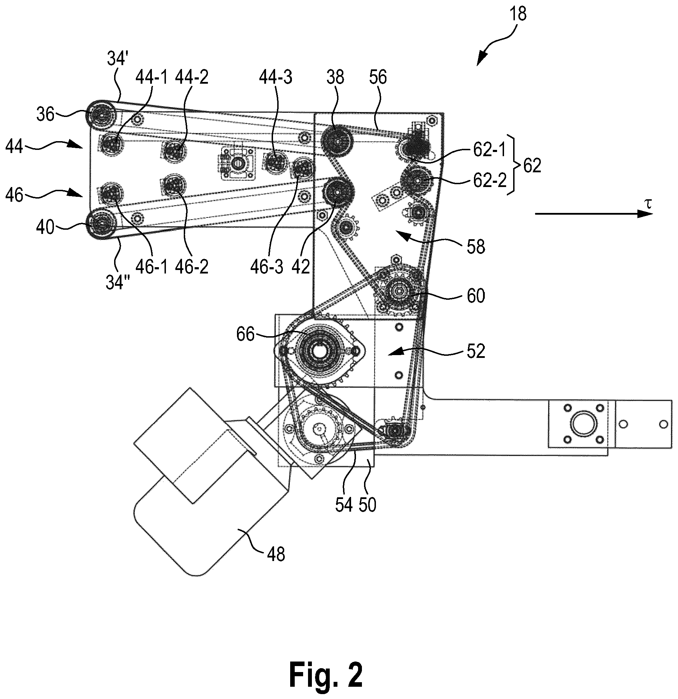

Fig. 2 zeigt eine Seitenansicht einer Ausführungsform einer Zuführeinrichtung 18. Dabei ist die dem Packgut 12 zugewandte Seite der Zuführeinrichtung 18 gezeigt.

Die erste Zuführeinrichtung 18 und die zweite Zuführeinrichtung 18` sind bezüglich der Transportrichtung T einander gegenüberliegend angeordnet. Die nachstehend erläuterte Ausgestaltung der Zuführeinrichtungen 18, 18' erfolgt der Übersicht halber lediglich anhand der Zuführeinrichtung 18, trifft jedoch im Wesentlichen auch auf die andere der beiden Zuführeinrichtungen 18, 18' zu.

Zum Transport und zur Fixierung der Papierbahnen 14, 16 ist in der Zuführeinrichtung 18, 18' ein Paar von Endloselementen 34 vorgesehen. Das Paar von Endloselementen 34 weist vorliegend ein oberes Endloselement 34` und ein unteres Endloselement 34" auf. Das obere Endloselement 34` läuft um zwei Rollen 36, 38 um. Das untere Endloselement 34" läuft um zwei Rollen 40, 42 um.

Um die obere Papierbahn 14 und die untere Papierbahn 16 zu fördern, weist die Zuführeinrichtung 18, 18' ein erstes Förderelement 44 und ein zweites Förderelement 46 auf. Das obere Endloselement 34' und das erste Förderelement 44 sind auf zwei bezüglich der oberen Papierbahn 14 gegenüberliegenden Seiten der oberen Papierbahn 14 angeordnet und ziehen die obere Papierbahn 14 zwischen sich ein und führen diese der Papierbahnebene 19, 19' zu. Das untere Endloselement 34" und das zweite Förderelement 46 sind auf zwei bezüglich der unteren Papierbahn 16 gegenüberliegenden Seiten der unteren Papierbahn 16 angeordnet und ziehen die untere Papierbahn 16 zwischen sich ein und führen diese der Papierbahnebene 19, 19' zu. Das erste Förderelement 44 ist vorliegend als Rollenanordnung mit drei Rollen 44-1, 44-2 und 44-3 ausgebildet. Das zweite Förderelement 46 ist vorliegend als Rollenanordnung mit drei Rollen 46-1, 46-2 und 46-3 ausgebildet. Wie der Fig. 2 zu entnehmen ist, kann das Paar von Endloselementen 34 zueinander geneigt sein.

Darüber hinaus zeigt die Fig. 2 einen Motor 48 zum Antreiben des Endloselementenpaars 34. Der Motor 48 ist beispielhaft an einer Halterung 50 der Zuführeinrichtung 18 montiert und treibt über einen ersten Rädermechanismus 52 ein erstes Antriebselement 54 an. Des Weiteren ist ein zweites Antriebselement 56 vorgesehen. Das zweite Antriebselement 56 ist über einen zweiten Rädermechanismus 58 bewegbar. Der erste Rädermechanismus 52 und der zweite Rädermechanismus 58 teilen sich ein gemeinsames Umlenkrad 60. Mit anderen Worten sind das erste Antriebselement 54 und das zweite Antriebselement 56 über das gemeinsame Umlenkrad 60 miteinander wirkverbunden. Darüber hinaus kämmt das zweite Antriebselement 56 mit der Rolle 38 des oberen Endloselements 34` und der Rolle 42 des unteren Endloselements 34". Auf diese Weise können die Bewegungsgrößen des Motors (z.B. Drehmoment, Drehzahl oder dergleichen) auf das zweite Antriebselement 56 übertragen werden.

In der Zuführeinrichtung 18 kann in der Transportrichtung T stromabwärts bezüglich des Endloselementenpaars 34 ein Rollenpaar 62 vorgesehen sein. Das Rollenpaar 62 weist eine erste Rolle 62-1 und eine zweite Rolle 62-2 auf. Die erste Rolle 62-1 und die zweite Rolle 62-2 sind dazu ausgebildet, die zugeführten Papierbahnen 14, 16 an einer Längsseite zwischen sich einzuziehen und in der Papierbahnebene 19, 19' zu fördern. Es kann vorgesehen sein, dass die Abrollrichtung des Rollenpaares 62 parallel zu der Transportrichtung T ausgerichtet ist. In Fig. 2 ist zu erkennen, dass auch die erste Rolle 62-1 und die zweite Rolle 62-2 des Rollenpaars 62 mit dem zweiten Antriebselement 56 kämmen.

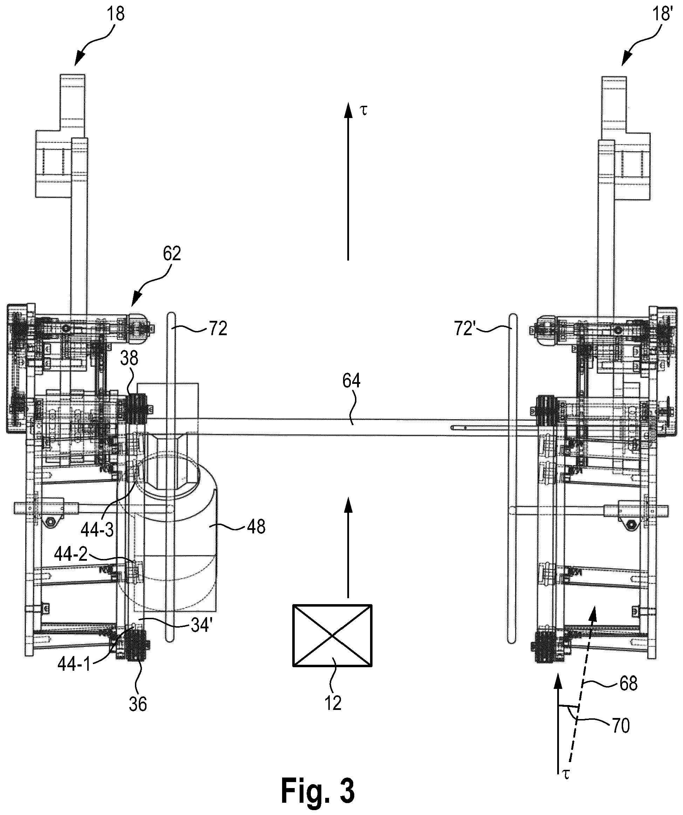

Fig. 3 zeigt eine Draufsicht einer Ausführungsform der Zuführeinrichtungen 18, 18`. Gleiche Elemente sind mit gleichen Bezugszeichen versehen und werden nicht näher erläutert.

Bevor die Papierbahnen 14, 16 in der Transportrichtung T der Querschweißeinrichtung 20 zugeführt werden, können die Papierbahnen 14, 16 in den Zuführeinrichtungen 18, 18' insbesondere einer Querstraffung untergezogen werden. Zu diesem Zweck kann vorgesehen sein, dass eine Abrollrichtung der Rollen 44-1, 44-2 und 44-3 des ersten Förderelements 44 und eine Abrollrichtung 68 der Rollen 46-1, 46-2 und 46-3 des zweiten Förderelements 46 relativ zu der Transportrichtung T jeweils unter einem Rollenwinkel 70 nach außen verläuft. Es kann insbesondere vorgesehen sein, dass eine Abrollrichtung des Endloselementenpaars 34 parallel zu der Transportrichtung T ausgerichtet ist.

Es kann insbesondere vorgesehen sein, dass die erste Zuführeinrichtung 18 und die zweite Zuführeinrichtung 18' über einen gemeinsamen Motor 48 angetrieben sind. Zu diesem Zweck kann eine sich zwischen der ersten Zuführeinrichtung 18 und der zweiten Zuführeinrichtung 18' erstreckende Welle 64 vorgesehen sein. Die Welle 64 ist vorzugsweise orthogonal zu der Transportrichtung T ausgerichtet. Die Welle 64 ist an ihren beiden gegenüberliegenden Enden jeweils drehfest mit einem Rad 66, vgl. Fig. 2, des ersten Rädermechanismus 52 verbunden. Auf diese Weise kann eine Umlaufbewegung des ersten Antriebselements 52 der ersten Zuführeinrichtung 18 gleichermaßen auf eine Umlaufbewegung des ersten Antriebselements 52 der zweiten Zuführeinrichtung 18' übertragen werden.

Wie in der Draufsicht der Fig. 3 zu erkennen ist, ist eine Abrollrichtung des Rollenpaars 36, 38 des oberen Endloselements 34' bzw. des Rollenpaars 40, 42 des unteren Endloselements 34" parallel zu der Transportrichtung T ausgebildet. Auf diese Weise bewegen sich die Endloselemente 34' und 34", also parallel zu der Transportrichtung.

Demgegenüber ist die Abrollrichtung der nicht angetriebenen Rollen 44-1, 44-2 und 44-3 jedoch, wie voranstehend ausgeführt, gegenüber der Transportrichtung T um den Rollenwinkel 70 geneigt. Auf diese Weise kann eine gute Führung und Querstraffung der Papierbahnen erzeugt werden, ohne diese zu stark zu beanspruchen und eventuell zu zerreißen. Ein Wandern der Papierbahnen 14, 16 wird vermieden, da die Abrollrichtungen 68 der einander gegenüberliegenden Rollen 44-1, 44-2 und 44-3 der beiden Zuführeinrichtungen 18, 18' voneinander weg und jeweils nach außen weisen.

Die Abrollrichtung 68 der ersten Rolle 62-1, der zweiten Rolle 62-3 ist ebenfalls parallel zu der Transportrichtung.

Die erste Rolle 62-1 und die zweite Rolle 62-2 sind stromabwärts zwischen dem jeweiligen oberen bzw. unteren Endloselement 34', 34" und der Quertrennschweißeinrichtung angeordnet. Die erste Rolle 62-1 und die zweite Rolle 62-3 ziehen die erste und die zweite Papierbahnen zwischen sich ein. Dies geschieht an beiden Seiten seitlich des Packguts 12. Die Papierbahnen 14, 16 werden dann in der Papierbahnebene 19 gemeinsam geführt und werden nach der Quertrennschweißeinrichtung 20 in die jeweilige Längstrennschweißeinrichtung 22 bzw. 22' eingezogen.

Des Weiteren sind zwei Schienen 72 bzw. 72' vorgesehen, von denen jeweils eine einer Zuführeinrichtung zugeordnet ist. Die jeweilige Schiene 72, 72' ist innen, d.h. in Richtung des Packguts, von dem oberen Endloselement 34' der jeweiligen Zuführeinrichtung 18, 18' angeordnet. Die obere Papierbahn 14 kann auf diesen Schienen 72, 72' gleiten und wird innen, d.h. dort, wo das Packgut 12 angeordnet ist, dadurch leicht geöffnet gehalten, um das Einlaufen des Packguts 12 zwischen die obere Papierbahn 14 und die untere Papierbahn 16 zu vereinfachen.

Die Ausgestaltung der Rollen 62-1 und 62-3 kann geeignet ausgeführt sein, um ein gutes Einziehen und Führen der Papierbahnen 14, 16 zu gewährleisten. Beispielsweise kann eine der Rollen, beispielsweise die Rolle 62-2, mit einer geriffelten Oberfläche ausgebildet sein, die Rolle 62-1 bzw. die jeweils andere Rolle kann gummiert ausgebildet sein.

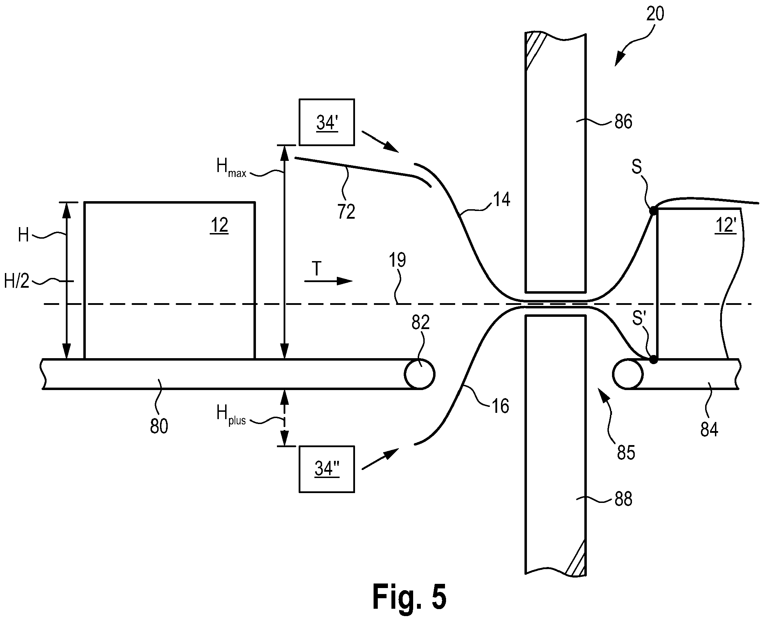

In Fig. 5 ist eine schematische Ansicht zur Erläuterung der Zufuhr der oberen Papierbahn 14 und der unteren Papierbahn 16 dargestellt.

Das Packgut 12 läuft in der Transportrichtung T auf einem Transportband 80 ein. Ein stromabwärtiges Ende des Transportbandes 80 ist mit dem Bezugszeichen 82 bezeichnet.

Das Transportband 80 und ein nachfolgendes Transportband 84 bilden zwischen sich eine Stempellücke aus, in der die Quertrennschweißeinrichtung 20 angeordnet ist. Ein Oberstempel 86 und ein Unterstempel 88 der Quertrennschweißeinrichtung trennen und verschweißen die obere Papierbahn 14 und die untere Papierbahn 16 an der Stempellücke. Die Stempellücke ist allgemein mit dem Bezugszeichen 85 bezeichnet. Der Oberstempel 86 und der Unterstempel 88 verschweißen bzw. versiegeln die obere Papierbahn 14 und die untere Papierbahn 16 miteinander und trennen die beiden Papierbahnen zumindest teilweise quer zu der Transportrichtung T. Die obere Papierbahn 14 und die untere Papierbahn 16 bleiben lediglich an ihrer linken und ihrer rechten Seite noch miteinander verbunden und werden so in die Längstrennschweißeinrichtung eingezogen, wie nachfolgend noch näher erläutert wird.

Das Packgut 12 weist eine Höhe H auf. Die halbe Höhe des Packguts 12 ist mit H/2 bezeichnet. Die Papierbahnebene 19 ist mittels einer gestrichenen Linie eingezeichnet.

In der Ansicht der Fig. 5 ist hervorzuheben, dass diese in etwa in der Mitte des Transportbands 80 dargestellt ist. Die lediglich schematisch eingezeichneten Einrichtungen der Zuführeinrichtung 18 befinden sich folglich hinter der Zeichenebene der Fig. 5. Die Einrichtungen der gegenüberliegenden Zuführeinrichtung 18' befinden sich vor der Zeichenebene der Fig. 5. Dargestellt sind schematisch das obere Endloselement 34' und das untere Endloselement 34" sowie die Schiene 72 der Zuführeinrichtung 18, diese befinden sich jedoch hinter der Ebene der Fig. 5. Das Packgut 12 fährt mittig zwischen den Zuführeinrichtungen 18 und 18' hindurch.

Eingezeichnet sind des Weiteren eine Höhe Hₘₐₓ. Dies ist die Maximalhöhe eines Packguts 12 das verarbeitet werden kann. Diese Höhe ist die Höhe des oberen Endloselements 34' über dem Transportband 80. Das untere Endloselement 34" befindet sich unterhalb des Transportbands 80. Die halbe Höhe zwischen dem oberen und dem unteren Endloselement, wo sich die Papierbahnebene 19 befindet, ist somit unterhalb der halben Packguthöhe H/2.

Die erste Zuführeinrichtung 18 und die zweite Zuführeinrichtung 18' sind in Gänze in der Höhe verstellbar. Sofern sind auch das obere Endloselement 34' und das untere Endloselement 34" gemeinsam mit der Schiene 72 in der Höhe verstellbar. Auf diese Weise kann die Verpackungsmaschine auf eine gewünschte maximale Packguthöhe Hₘₐₓ eingestellt werden. Beispielsweise kann vorgesehen sein, dass die Höhe Hₘₐₓ zwischen 0 und 100 mm verstellbar ist.

In der Fig. 5 ist die Quertrennschweißeinrichtung 20 in einer geschlossenen Stellung dargestellt. Da Papier ein Material ist, das nicht dehnbar ist und bei hoher Dehnung reißt, müssen die obere Papierbahn 14 und die untere Papierbahn 16 "nachgeschoben" werden, wenn die Quertrennschweißeinrichtung schließt. Insgesamt ist der Betrieb der Verpackungsmaschine 10 getaktet. Dies bedeutet, dass bei geschlossener Quertrennschweißeinrichtung 20 die Längstrennschweißeinrichtung steht, die Geschwindigkeit der zweiten Antriebseinrichtung 26 ist dann 0. Jedoch wird die erste Antriebseinrichtung 24 der Zuführeinrichtungen 18 und 18' nicht sofort gestoppt. Dies hat folgenden Grund.

Schematisch sind die Punkte S und S' in der Fig. 5 eingezeichnet. Dieses sind der obere und der untere Punkt einer stromaufwärtigen Seite des in der Fig. 5 mit dem Bezugszeichen 12' bezeichneten Packguts. Die obere Papierbahn 14 und die untere Papierbahn 16 werden in der Papierbahnebene 19 miteinander verschweißt und getrennt. Die obere Papierbahn 14 muss somit an dem Packgut 12' bis zur Papierbahnebene 19 herunterreichen. Gleiches gilt für die untere Papierbahn 16, die von Punkt S' bis zur Papierbahnebene 19 reichen muss. Dann verlaufen die obere und die untere Papierbahn stromaufwärts zwischen dem Oberstempel 86 und dem Unterstempel 88 hindurch und dann hin zu dem jeweiligen oberen Endloselement 34' bzw. unteren Endloselement 34".

Wie in der Fig. 5 zu entnehmen ist, verlaufen der obere Papierbahn 14 und die untere Papierbahn 16 jedoch zwischen oberen Endloselement 34' und dem Punkt S bzw. von dem unteren Endloselement 34" in dem Punkt S' nicht in gerader Linie. Außen an den entgegengesetzten Seiten der Papierbahnen 14, 16 sind die Papierbahnen durch die Rollen 62-1 und 62-2 in der Papierbahnebene 19 geführt. In der Mitte, dort wo das Packgut 12 befindlich ist, wie in der Fig. 5 dargestellt, muss jedoch eine genügende Papiermenge bzw. Papierstrecke der oberen Papierbahn und der unteren Papierbahn 16 vorhanden sein, damit die Papierbahnen 14, 16 sich von den Punkten S bzw. S' in die Papierbahnebene 19 zusammenlegen und dort miteinander verschweißt werden können, ohne dass die Papierbahnen 14 und 16 reißen.

Folglich müssen, wenn die zweite Antriebseinrichtung 26 und die Längstrennschweißeinrichtung 22, 22' stillstehen, die Papierbahnen 14 und 16 durch die Zuführeinrichtungen 18, 18' noch für einen gewissen Zeitraum weitergefördert werden. Der Zeitraum, über den die Zuführeinrichtungen 18 bzw. 18' nachlaufen müssen bzw. "nachschieben" müssen, hängt von ihrer Fördergeschwindigkeit ab. Ausschlaggebend ist, dass eine ausreichende Länge der oberen Papierbahn 14 und der unteren Papierbahn 16 nachgeschoben wird. Dies ist von der Höheneinstellung Hₘₐₓ abhängig. Die Höheneinstellung Hₘₐₓ ändert zum einen den vertikalen Abstand zwischen den Punkten S und S'. Naturgemäß benötigt ein höheres Packgut 12' eine größere Materialmenge, damit die obere Papierbahn 14 und die untere Papierbahn 16 an seiner stromaufwärtigen Seite zusammengeführt werden können. Des Weiteren ist zu beachten, dass bei einer höheren Einstellung der Höhe Hₘₐₓ die Höhe des unteren Endloselements 34" näher an die Transportband 80 herangeführt wird. Um eine Kollision der unteren Papierbahn 16 mit dem Ende 82 des Transportbandes 80 zu vermeiden, werden sich der Oberstempel 86 und der Unterstempel 88 in der Papierbahnebene 19 treffen, so dass die untere Papierbahn 16 um das Ende 82 aufgrund seiner geringen Spannung herumläuft. Dies ist ebenfalls schematisch der Fig. 5 zu entnehmen.

Aus diesem Grund sind daher die erste Antriebseinrichtung 24 und die zweite Antriebseinrichtung 26 vorgesehen, die unabhängig voneinander zwei getrennte Fördergeschwindigkeiten bereitstellen können. Zum einen ermöglichen die zwei Antriebseinrichtungen 24 und 26, die obere Papierbahn 14 und die untere Papierbahn 16 mit zunehmender Fördergeschwindigkeit in Transportrichtung durch die Verpackungsmaschine 10 zu fördern, die Fördergeschwindigkeit der ersten Antriebseinrichtung 24 bzw. der Zuführeinrichtungen 18, 18' entspricht dabei in etwa 80 % der Fördergeschwindigkeit der Längstrennschweißeinrichtungen 22, 22'. Es ist des Weiteren auch möglich, im Rahmen des getakteten Betriebs bei stillstehender Förderung der zweiten Antriebseinrichtung 26 in den Längstrennschweißeinrichtungen 22, 22' die obere und untere Papierbahn 14, 16 um ein gewisses Maß "nachzuschieben", um ein Schließen von Oberstempel 86 und Unterstempel 88 in der Papierbahnebene 19 zu ermöglichen, ohne dass die Papierbahnen 14, 16 zerreißen.

Des Weiteren kann das Maß dieses "Nachschiebens" eingestellt und in Abhängigkeit der Höheneinstellung der Zuführeinrichtungen 18, 18' hinterlegt sein, so dass eine Höheneinstellung der durch die obere Papierbahn 14 und die untere Papierbahn 16 gebildeten Tasche damit des maximal verpackbaren Packguts 12 eingestellt werden kann.

Aufgrund der Bereitstellung der Zuführeinrichtungen 18, 18' mit der ersten Antriebseinrichtung und der Längstrennschweißeinrichtungen 22, 22' mit der zweiten Antriebseinrichtung wird dies möglich.

Grundsätzlich ist der Begriff "Antriebseinrichtung" unabhängig von der Anzahl der Motoren und der mechanischen Kopplung zu verstehen. Sie kann, wie in den Figuren dargestellt, jeweils ein Motor für die erste Antriebseinrichtung bzw. die zweite Antriebseinrichtung bereitgestellt sein, der dann mit den Zuführeinrichtungen 18, 18' bzw. den Längstrennschweißeinrichtungen 22, 22' zu beiden Seiten mechanisch gekoppelt ist. Es kann jedoch innerhalb jeder der Antriebseinrichtungen auch eine Mehrzahl von Motoren vorgesehen sein, wobei dann zumindest ein Motor für jede der Zuführeinrichtungen 18, 18' bzw. Längstrennschweißeinrichtungen 22, 22' bereitgestellt ist. Diese müssen dann gleichlaufend geregelt sein.

Das Nachschieben der oberen Papierbahn 14 und der unteren Papierbahn 16 wird dann durch Stoppen der ersten Antriebseinrichtung 24 beendet. Es kann des Weiteren vorgesehen sein, dass stromaufwärts, insbesondere an der oberen Abwickelrolle 15 und der unteren Abwickelrolle 17 eine Bremse vorgesehen ist, die gleichzeitig betätigt wird um die obere Papierbahn 14 und die untere Papierbahn 16 unmittelbar anzuhalten. Auf diese Weise wird ein Nachlaufen aufgrund der Trägheit der Papierbahnen 14, 16 vermieden und die Papierbahnen 14, 16 bleiben bei einem Anhalten der ersten Antriebseinrichtung 24 sofort stehen, wobei sie keine Spannung in der Transportrichtung T verlieren.

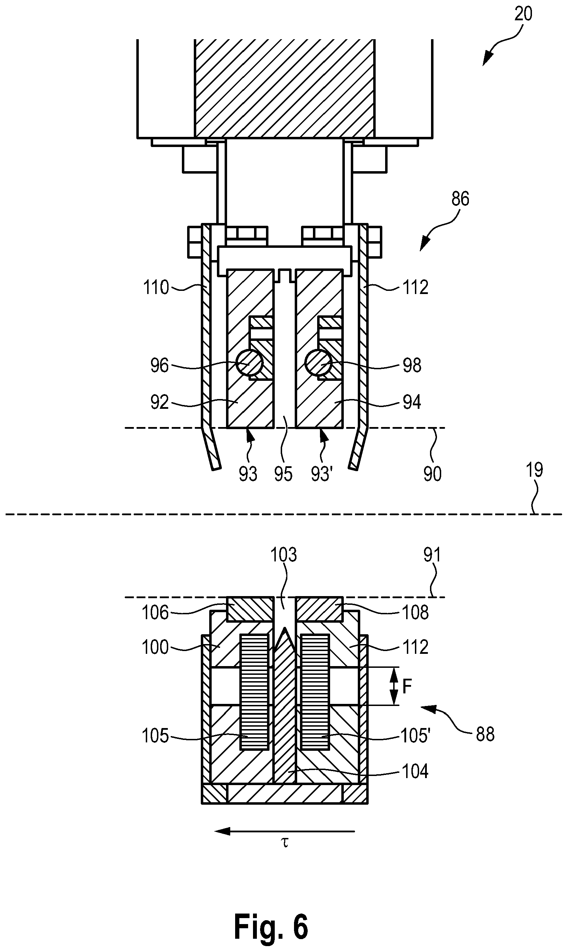

Fig. 6 zeigt eine seitliche Querschnittsansicht durch die Quertrennschweißeinrichtung 20. Gleiche Elemente sind mit gleichen Bezugszeichen gekennzeichnet und werden nicht erneut erläutert.

Der Oberstempel 86 und der Unterstempel 88 sind jeweils quasi zweigeteilt ausgeführt. Die Schweißelemente des Oberstempels 86 bilden eine dem Unterstempel 88 zugewandte Schweißflächenebene 90 aus. Die entsprechenden Elemente des Unterstempels 88 bilden eine dem Oberstempel 86 zugewandte Schweißflächenebene 91 aus. Beim Zusammenfahren des Oberstempels 86 und des Unterstempels 88 treffen sich diese in der Papierbahnebene 19, um die obere Papierbahn 14 und die untere Papierbahn 16 miteinander zu verschweißen und quer zu trennen.

Üblicherweise sind Niederhalter 110 und 112 vorgesehen, die zum einen eine Sicherheitsfunktion haben und ein Eingreifen an die beheizten Elemente des Oberstempels oder ein Eingreifen in die geschlossenen Quertrennschweißeinrichtungen vermeidet. Des Weiteren können sie die aufeinanderliegenden Papierbahnen 14, 16 während des Schweißvorgangs niederhalten. Grundsätzlich können die Niederhalter 110, 112 im Oberstempel 86 fest angeordnet sein und seitlich an dem Unterstempel 88 vorbeifahren. Es kann auch eine richtige Beweglichkeit der Niederhalter 110, 112 im Oberstempel 86 bereitgestellt sein, so dass diese auf dem Unterstempel 88 zur Auflage kommen, der Oberstempel 86 dann aber weiter nach unten fahren kann und bis die Schweißflächenebene 90 und 91 in der Papierbahnebene 19 zusammenfallen.

Der Oberstempel 86 weist einen ersten Stempelteil 92 und einen zweiten Stempelteil 94 auf. In dem ersten Stempelteil 92 ist eine erste Heizpatrone 96 oder eine andere geeignete Beheizungseinrichtung angeordnet. In dem zweiten Stempelteil 94 ist eine zweite Heizpatrone 98 oder eine andere geeignete Beheizungseinrichtung angeordnet. Die Beheizungseinrichtungen 96 und 98 können auch miteinander verbunden bzw. als eine Beheizungseinrichtung ausgeführt sein. Der erste Stempelteil 92 und der zweite Stempelteil 94 ist durch einen Spalt 95 in Transportrichtung voneinander beabstandet. Ihre dem Unterstempel 88 zugewandten Flächen 93 bzw. 93' bilden die Schweißflächenebene 90 aus. Der erste und der zweite Stempelteil 92, 94 werden auf eine Temperatur erhitzt, die ein Verschweißen der oberen und der unteren Papierbahn 14, 16 ermöglicht. Die obere und die untere Papierbahn 14, 16 sind dazu auf ihren einander zugewandten Flächen einer geeigneten Beschichtung versehen, die sich bei ausreichender Erwärmung miteinander verschweißen bzw. verkleben.

Hierzu werden die Flächen 93 bzw. 93' auf ein erstes Gegendruckelement 106 bzw. ein zweites Gegendruckelement 108 gedrückt. Die Gegendruckelemente 106, 108 sind an dem Unterstempel 88 vorgesehen und bilden dort die Schweißflächenebene 91 aus. Sie sind aus einem temperaturbeständigen Material ausgebildet, beispielsweise aus Teflon. Das erste Gegendruckelement 106 ist Teil einer ersten Druckaufnahmeeinrichtung 100 und das zweite Gegendruckelement 108 ist Teil einer zweiten Druckaufnahmeeinrichtung 102. Die Druckaufnahmeeinrichtungen 100, 102 weisen in der dargestellten Ausgestaltung jeweils ein Federelement 105, 105' auf. Auf diese Weise ist es möglich, dass das erste Gegendruckelement 106 und das zweite Gegendruckelement 108 um einen Federweg F einfedern können. Auf diese Weise kann ein in einem Spalt 103, der dem Spalt 95 über die Papierbahnebene 19 gegenüberliegt, befindliches Trennmesser 104 heraustritt. Die erste Druckaufnahmeeinrichtung 100 und die zweite Druckaufnahmeeinrichtung 102 sind mit Spalt 103 beabstandet. Das Trennmesser 104 befindet sich feststehend in dem Spalt. Federn das erste Gegendruckelement 106 und das zweite Gegendruckelement 108 ein, tritt das Trennmesser 104 durch die Schweißflächenebene 91 bzw. die Papierbahnebene 19 hindurch und in den Spalt 95 ein. Alternativ kann auch eine Bewegung des Trennmessers mittel einer Aktuierungseinrichtung erfolgen, die beispielsweise pneumatisch ausgebildet ist. Die Druckaufnahmeeinrichtungen 100, 102 können dann feststehend ausgebildet sein. Auf diese Weise können die obere Papierbahn 14 und die untere Papierbahn 16 durchschnitten bzw. getrennt werden.

Gleichzeitig wird auf beiden Seiten des Schnitts eine Verschweißung der oberen Papierbahn 14 und der unteren Papierbahn 16 erzeugt, indem die Schweißfläche 93 auf dem ersten Gegendruckelement 106 und die Schweißfläche 93' auf dem zweiten Gegendruckelement 108 zur Anlage kommt, wobei die Papierbahnen 14, 16 geklemmt werden. Die Papierbahnen 14 und 16 werden bei der geschlossenen Quertrennschweißeinrichtung 20 nicht in Transportrichtung T weiterbewegt. Es folgt ein Wärmeeintrag, der die Papierbahnen 14, 16 miteinander verschweißt bzw. verklebt. Durch das Trennmesser 104 werden sie gleichzeitig durchschnitten.

Der Oberstempel 86 und der Unterstempel 88 werden dann voneinander wegbewegt und die Papierbahnen 14, 16 können sich in Transportrichtung T weiterbewegen. Auf diese Weise wird eine getaktete Quertrennschweißung umgesetzt.

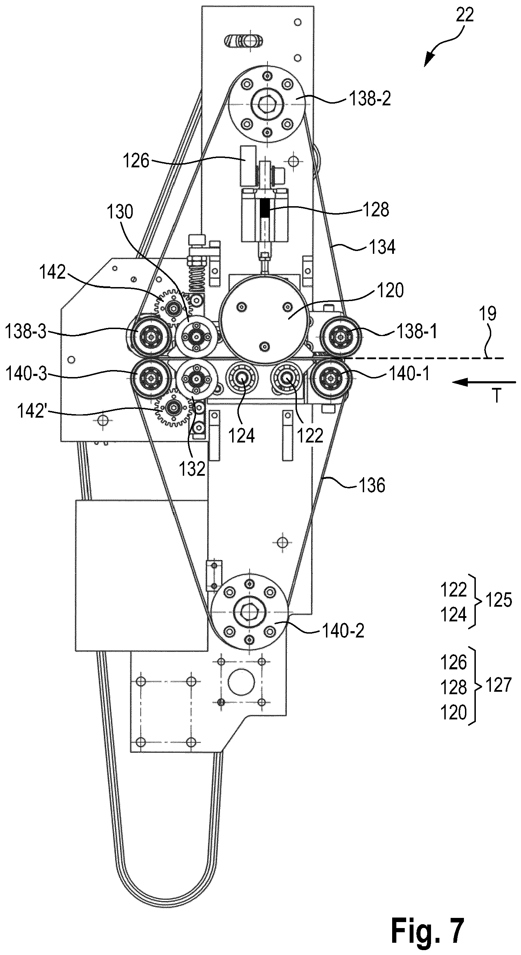

Die Fig. 7 zeigt eine Seitenansicht einer Ausführungsform der Längstrennschweißeinrichtung 22.

Die Längstrennschweißeinrichtung 22 weist einen Aufbau auf, dem denjenigen der Längstrennschweißeinrichtung 22' entspricht. Die Längstrennschweißeinrichtungen 22 und 22' bilden dann zusammengenommen ein Längstrennschweißsystem 21 aus. Dabei sind die Längstrennschweißeinrichtungen 22 und 22' einander gegenüberliegend angeordnet. Sie verschweißen dann zwei aufeinanderliegenden Papierbahnen 14, 16 an entgegengesetzten Seiten der Papierbahnen 14, 16 bzw. der Verpackungsmaschine 10.

Im Folgenden wird anhand der Figuren beispielhaft die Längstrennschweißeinrichtung 22 beschrieben. Die Längstrennschweißeinrichtung 22 weist ein erstes Andrückrad 122 und ein zweites Andrückrad 124 auf. Grundsätzlich kann auch eine andere Zahl von Andrückrädern vorgesehen sein. Das erste Andrückrad 122 und das zweite Andrückrad 124 bilden eine Andrückbaugruppe 125 aus. Die Andrückbaugruppe 125 wirkt mit einem Schweißrad 120 zusammen. Das Schweißrad 120 ist beheizt. Die Anordnung der Längstrennschweißeinrichtung 22 ist derart, dass die Papierbahnebene 19 das Schweißrad 120 schneidet. Mit anderen Worten ragt das Schweißrad 120 in die Papierbahnebene 19 hinein. Die Papierbahnen 14, 16 werden somit in etwa S-förmig zwischen dem Schweißrad und dem ersten Andrückrad 122 und dem zweiten Andrückrad 124 hindurchgeführt. Das erste Andrückrad 122 und das zweite Andrückrad 124 sind in der dargestellten Ausgestaltung lediglich auf Kugellagern gelagert und selbst nicht angetrieben. Das beheizte Schweißrad 120 ist ebenfalls nicht angetrieben. Grundsätzlich kann es jedoch auch angetrieben sein.

In der Darstellung der Fig. 7 ist das Schweißrad in einer Arbeitsposition dargestellt. In der Arbeitsposition ragt es durch die Papierbahnebene 19 hindurch. In der Arbeitsposition liegt das Schweißrad 120 an dem ersten Andrückrad 122 und dem zweiten Andrückrad 124 an bzw. die Papierbahnen 14, 16 laufen zwischen dem Schweißrad 120, dem ersten Andrückrad 122 und dem zweiten Andrückrad 124 hindurch. Es ist ein Vorspannelement 126 vorgesehen, dass das Schweißrad 120 in eine Ruheposition vorspannt. In der Ruheposition, wie nachstehend noch erläutert wird, ist das Schweißrad 120 von dem ersten Andrückrad 122 und dem zweiten Andrückrad 124 beabstandet. Die Papierbahnebene 19 läuft dann frei zwischen dem Schweißrad 120, dem ersten Andrückrad 122 und dem zweiten Andrückrad 124 hindurch. Das Schweißrad 120 ist dann derart weit von der Papierbahnebene 19 beabstandet, dass auch aufgrund von Strahlungswärme keinerlei Wärmeeintrag mehr in die Papierbahnen 14, 16 erfolgt, der diese beschädigen könnte, selbst wenn die Papierbahnen 14, 16 für lange Zeit stillstehen.

Des Weiteren ist eine Verstelleinrichtung 128 vorgesehen, die das Schweißrad 120 gegen die Kraft des Vorspannelements 126 in die in Fig. 7 dargestellte Arbeitsposition drückt.

Die Ausgestaltung der Verstelleinrichtung 128 und des Vorspannelements 126 kann geeignet gewählt sein. Beispielsweise kann eine mechanische Umsetzung gewählt werden, in der das Vorspannelement ein Federelement ist und die Verstelleinrichtung ein Aktuator, beispielsweise pneumatisch betrieben. Es kann auch eine elektromagnetische Lösung gewählt werden, in der das Vorspannelement 126 durch Permanentmagneten bereitgestellt ist und die Verstelleinrichtung 128 durch einen Elektromagneten bzw. eine mit Strom beaufschlagbare Spule. Es kann auch eine Kombination dieser Elemente gewählt werden. Jedenfalls ist das Schweißrad 120 mittels des Vorspannelements 126 in die Ruheposition vorgespannt. Dies bewirkt, dass beispielsweise bei einem Stromausfall das Schweißrad 120 automatisch in die Ruheposition springt. Bei einem Notaus aus der Maschine erfolgt daher keine Beschädigung in der Papierbahn. Des Weiteren wird auf diese Weise bewirkt, dass während des Vorgangs des Quertrennschweißens, bei dem die Papierbahnen 14, 16 innerhalb der Längstrennschweißeinrichtung nicht in Transportrichtung T gefördert werden, das Schweißrad 120 in die Ruheposition bewegt wird, so dass während des Quertrennschweißvorgangs ebenfalls keine Beschädigung der Papierbahnen 14, 16 durch Wärmeeintrag erfolgt.

Zum Antreiben der oberen Papierbahn 14 und der unteren Papierbahn 16 sind ein erstes Endloselement 134 und ein zweites Endloselement 136 vorgesehen. Diese sind in der dargestellten Ausgestaltung als Riemen ausgebildet. Das erste Endloselement 134 läuft über Rollen 138-1, 138-2 und 138-3 um. Über die Rolle 138-2 wird das Endloselement 134 angetrieben.

Für das Endloselement 136 ergibt sich ein entsprechender Aufbau. Dieses läuft über Rollen 140-1, 140-2 und 140-3 um. Über die Rolle 140-2 wird das Endloselement 136 angetrieben.

Stromabwärts des Schweißrads 120 ist ein rotierendes Trennmesser 130 angeordnet. Dieses liegt an einem Stützrad 132 an. Die Papierbahnen 14, 16 laufen durch das auf dem Stützrad 132 anliegende Trennmesser 130 hindurch und werden parallel zur Transportrichtung T von dem Trennmesser 130 durchtrennt. In der dargestellten Ausgestaltung sind sowohl das Trennmesser 130 als auch das Stützrad 132 angetrieben. Hierfür sind Richtungsumkehrräder 142, 142'. Auf diese Weise wird das Trennmesser 130 über die Rolle 138-3 angetrieben und das Stützrad 132 über die Rolle 140-3.

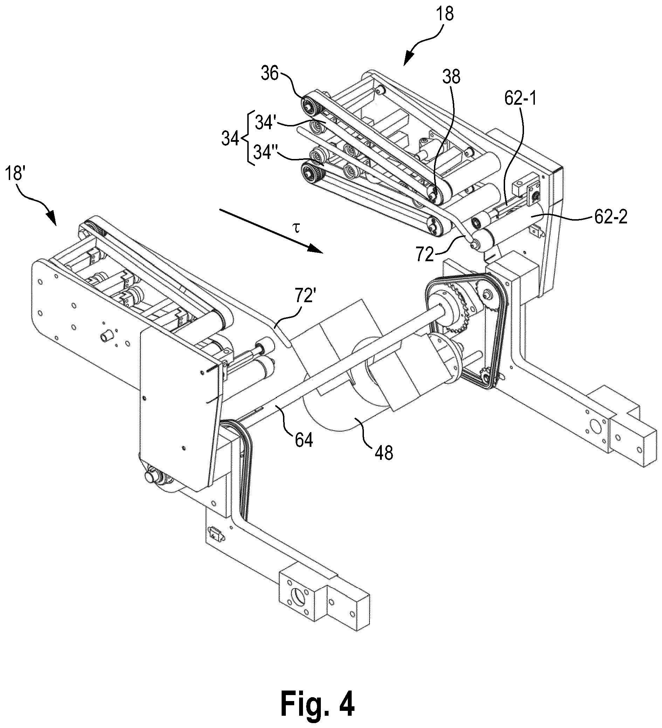

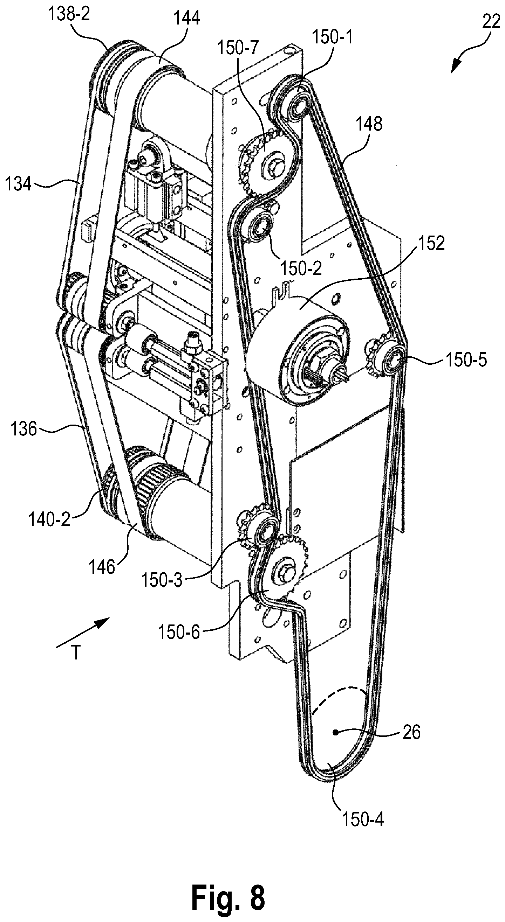

Die Fig. 8 zeigt die Längstrennschweißeinrichtung 22 der Fig. 7 mit einer isometrischen Ansicht und von einer der Fig. 7 entgegengesetzten Blickrichtung. Gleiche Elemente sind mit gleichen Bezugszeichen gekennzeichnet und werden nicht genau erläutert. Für die Endloselemente 134, 136 ist ein gemeinsamer Antrieb vorgesehen, die zweite Antriebseinrichtung 26. Die zweite Antriebseinrichtung 26 treibt ein weiteres Endloselement 148 an, das über mehrere Rollen 150-1 bis 150-7 umläuft. Die Rolle bzw. das Rad 150-7 treibt die Rolle 138-2 an. Die Rolle bzw. das Rad 150-6 treibt die Rolle 140-2 an. An einem unteren Ende ist dann ein schematisch dargestelltes Rad bzw. Rolle 150-4 vorgesehen, das mit der Antriebseinrichtung 26 gekoppelt ist. Wie schematisch auch in der Fig. 4 für die Zuführeinrichtung 18 gezeigt, kann auch ein einziger Motor vorgesehen sein, der die einander gegenüberliegenden Längstrennschweißeinrichtungen 22 und 22' antreibt.

Schematisch dargestellt und mit 152 bezeichnet ist eine Heizeinrichtung. Diese beheizt das Schweißrad 120. Entsprechende Wärmeleitelemente sind nicht dargestellt und transportieren die Wärme von der Heizeinrichtung 152 zu dem Schweißrad 120 durch die Längstrennschweißeinrichtung 22.

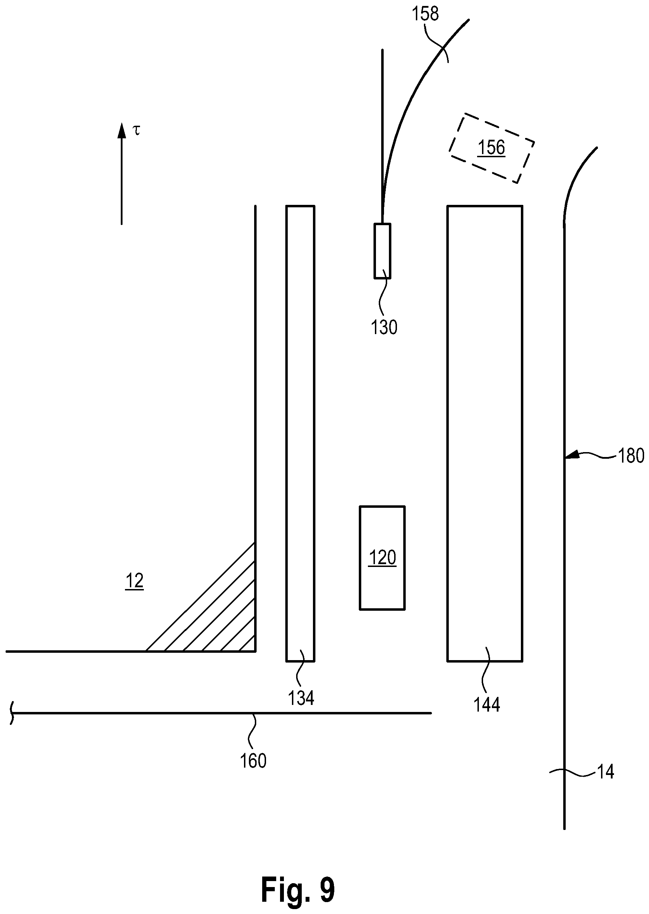

Die Fig. 9 zeigt schematisch in der Draufsicht die Wirkungsweise der Längstrennschweißeinrichtung 22. Es ist lediglich eine Seite des Packguts 12 und der oberen Papierbahn 14 dargestellt. Eine Längsseite der Papierbahn 14 ist mit 180 bezeichnet. Die Papierbahn 14 ist bereits mit der darunterliegenden unteren Papierbahn 16 quertrenngeschweißt. Die Quertrennung ist schematisch mit 160 eingezeichnet. Mit Blick wiederum auf die Fig. 8 sind die Endloselemente 134 und das breitere Endloselement 144 zu sehen. Das Endloselement 144 ist wie in der Fig. 9 erkennbar, auf der dem Packgut abgewandten Seite angeordnet und fördert in erster Linie die Papierbahnen, die dort, an ihrem äußeren Rand, nicht quergeschweißt und getrennt sind. Das Endloselement 134 fördert die Bahnen weiter innen auf der dem Packgut 12 zugewandten Seite von sowohl dem Schweißrad 120 als auch dem Trennmesser 130. Des Weiteren zu erkennen ist, ist das Schweißrad 120 stromaufwärts des Trennmessers angeordnet. Somit werden die Papierbahnen 14, 16 zunächst mittels des Schweißrads verschweißt und dann mittels des Trennmessers voneinander getrennt. Das Trennmesser kann dabei relativ zu dem Schweißrad angeordnet sein, das die Trennung innerhalb der Breite der Verschweißung erfolgt. Es kann aber auch vorgesehen sein, dass die Verschweißung nicht durchtrennt wird, sondern gerade seitlich außerhalb der Verschweißung die Trennung erfolgt. Nach der Trennung beim Trennmesser 130, d.h. stromabwärts in der Transportrichtung T wird Abfallstreifen der oberen und unteren Papierbahn 14, 16, der mit Bezugszeichen 158 bezeichnet ist, dann weggeführt. Es kann ein Rollenpaar 156 vorgesehen sein, das relativ zu der Transportrichtung nach außen geneigt ist, d.h., dass eine Abrollrichtung einen Winkel mit der Transportrichtung T einschließt, derart, dass der Abfallstreifen 158 seitlich nach außen weg gefördert wird. Grundsätzlich kann der Abfallstreifen 158 aber auch schlecht weg nach unten in einen Auffangbehälter geführt werden.

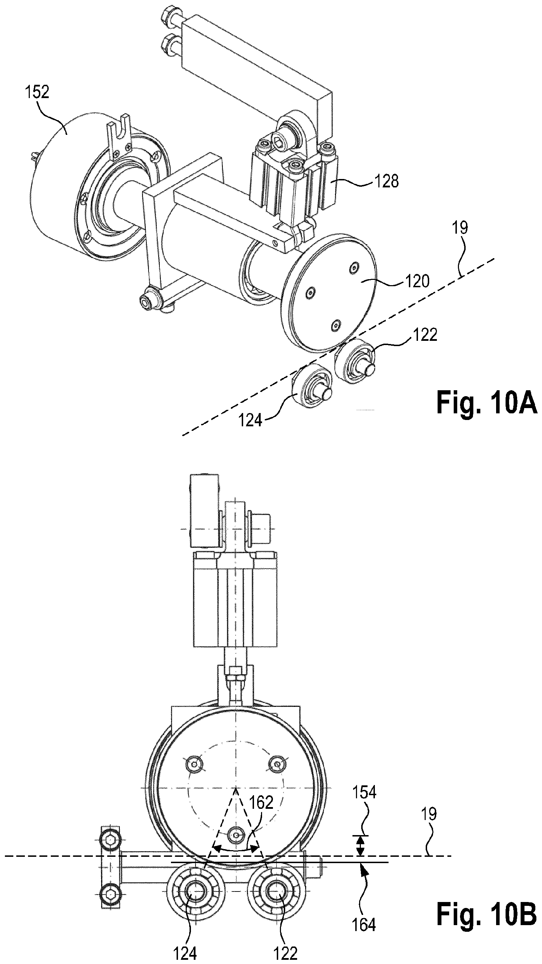

In den Figuren 10A und 10B ist das Schweißrad 120 mit dem ersten Andrückrad 122 und dem zweiten Andrückrad 124 freigeschnitten dargestellt. In der Fig. 10A ist das Schweißrad 120 in die Ruheposition bewegt. Wie zu erkennen ist, läuft die Papierbahnebene 19 dann frei zwischen dem Schweißrad 120 sowie dem ersten Andrückrad 122 und dem zweiten Andrückrad 124 hindurch.

In der Fig. 10B ist eine vergrößerte Seitenansicht gezeigt. Schematischer eingezeichnet ist ein Hub 154, um den das Schweißrad 120 zumindest zwischen der Arbeitsposition und der Ruheposition bewegt wird, so dass die Papierbahnebene 19 frei zwischen dem Schweißrad 120, dem ersten Andrückrad 122 und dem zweiten Andrückrad 124 hindurchlaufen kann. Die Fig. 10B zeigt also die Arbeitsposition und die Fig. 10A die Ruheposition. In der Fig. 10B ist ein Andrückbereich des Schweißrads 120 mit 162 bezeichnet. Es ist der Winkelbereich zwischen den Anlagepunkten zwischen dem Schweißrad 120 und dem ersten Andrückrad 122 auf der einen Seite und dem zweiten Andrückrad 124 auf der anderen Seite. Aufgrund des Andrückbereichs ist ein hinreichend großer Winkelbereich bereitgestellt, bei dem die Papierbahnen an dem Schweißrad 120 entlanglaufen, so dass ein genügend großer Wärmeeintrag die Berücksichtigung der Fördergeschwindigkeit erfolgt und die Papierbahnen miteinander verschweißt.

Eine höchste Ebene, die auf den Andrückrädern 122 und 124 aufliegt, ist mit dem Bezugszeichen 164 bezeichnet. Das Schweißrad 120 ragt mit einem Teil seines Umfangs durch die Ebene 164 hindurch. Die Papierbahnen 14, 16 müssen eine im Wesentlichen "S"-förmige Strecke entlang des Andrückbereichs 162 durchlaufen.

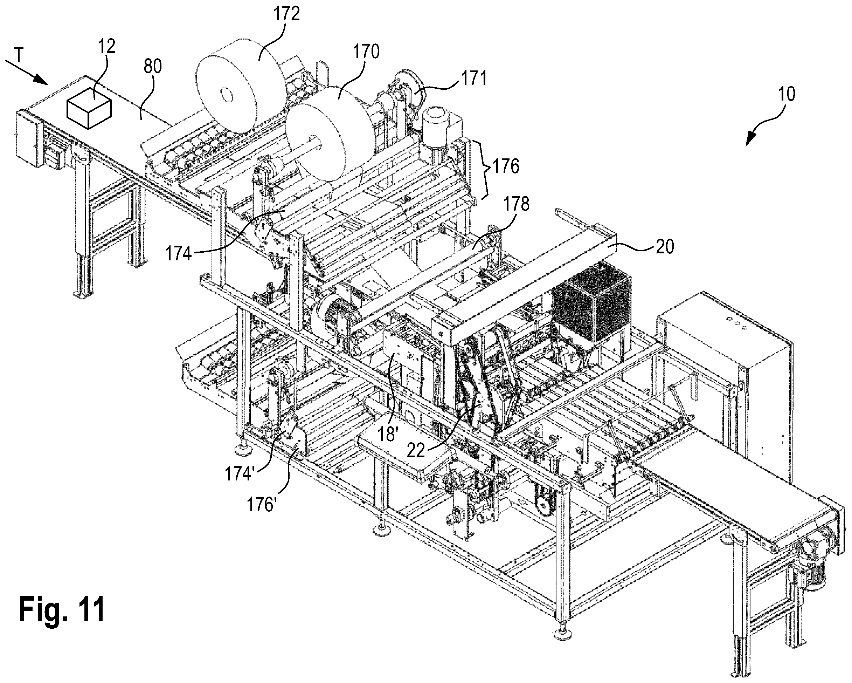

Fig. 11 zeigt eine isometrische Ansicht einer Ausführungsform der Verpackungsmaschine 10. Anhand der Fig. 11 soll noch einmal zusätzlich zu der lediglich schematischen Ansicht in Fig. 1 der Gesamtaufbau erläutert werden. Gleiche Elemente sind mit gleichen Bezugszeichen gekennzeichnet.

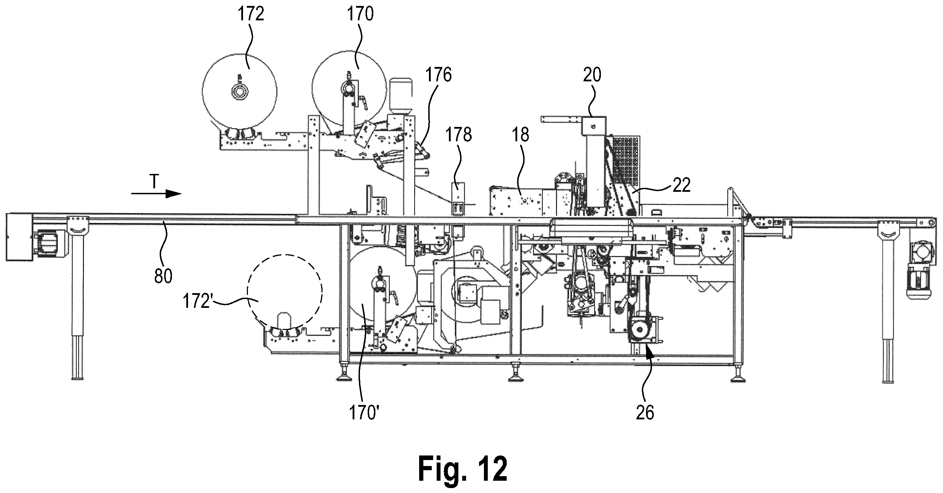

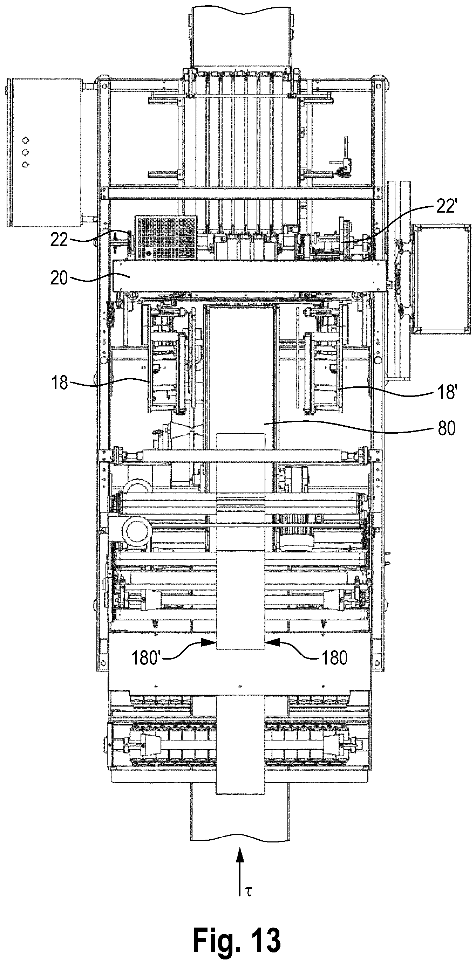

Erneut dargestellt sind die Transportrichtung T, das Packgut 12 und ein Transportband 80, auf der das Packgut 12 in die Verpackungsmaschine 10 einläuft. Die isometrische Ansicht der Fig. 11 ist in Seitenansicht in der Fig. 12 und in Draufsicht in der Fig. 13 dargestellt. Alle drei Figuren werden im Folgenden figurenübergreifend beschrieben.

In der isometrischen Ansicht der Fig. 11 in der Seitenansicht der Fig. 12 ist insbesondere um weiterzuerkennen, wie die Führung der Papierbahnen 14, 16 erfolgt. Insbesondere wird es nachfolgend anhand der oberen Papierbahn 14 erläutert. Zueinander entgegengesetzte Längsseiten der Papierbahn sind mit 180 und 180' bezeichnet. Es ist zu beachten, dass die Papierbahn schmal dargestellt, da sie sonst die Elemente der Verpackungsmaschine 10 verdecken würde, insbesondere die die Längsseiten einziehenden und fördernden Elemente. Eine entsprechende Führung ist für die untere Papierbahn 16 vorgesehen, bei der entsprechend wirkende Elemente mit einem Anführungszeichen bezeichnet sind.

Es ist eine obere Abwickelrolle 170 vorgesehen, von der die obere Papierbahn 14 abgewickelt wird. Eine weitere Vorratsrolle 172 ist dargestellt, die bereits eingerüstet sein kann. Auf diese Weise ist bei einem Abwickeln der Rolle 170 entstandenes Umrüsten auf die nächste Rolle möglich. Die gleiche Möglichkeit ist für die untere Papierbahn 16 vorhanden und mit dem Bezugszeichen 170' bzw. 172' schematisch in der Fig. 12 dargestellt.

Die obere Papierbahn 14 läuft nach Abwickeln von der Abwickelrolle 170 über eine obere Einzugsrolle 174, die auch als Einzugsrollenpaar ausgebildet sein kann. Die Einzugsrolle 174 kann bereits angetrieben sein und eine Antriebseinrichtung aufweisen, um auf diese Weise das Abwickeln von der Abwickelrolle 170 zu fördern. Die Abwickelrolle 170 selbst ist rotierbar gelagert. Für die Abwickelrolle 170 ist eine Bremseneinrichtung 171 bereitgestellt. Auf diese Weise kann die Abwickelrolle 170 gestoppt werden. Auf diese Weist ist es in dem getakteten Betrieb der Verpackungsmaschine 10 insbesondere möglich, ein Nachlaufen einer Papierbahn unmittelbar abzubremsen, wenn die erste Antriebseinrichtung 24 und die zweite Antriebseinrichtung 26 stillstehen. Auf diese Weise kann die Spannung der Papierbahn erhalten bleiben.

Anschließend ist eine Pendelrollenbaugruppe 176 vorgesehen, die ebenfalls zur Straffung und sicheren Führung der Papierbahn dient. Derartige Pendelrollenbaugruppen werden auf an sich bekannte Weise in vielfältigen Einwendungen eingesetzt. Eine weitere Einzugsrolle bzw. ein weiteres Einzugsrollenpaar ist mit dem Bezugszeichen 178 bezeichnet. Auch dieses Einzugsrollenpaar kann grundsätzlich angetrieben sein mittels einer eigenen Antriebseinrichtung. Anschließend läuft die Papierbahn dann in die Zuführeinrichtung 18'. Bereits auf diese Weise durchläuft die obere Papierbahn 14 über drei angetriebene Rollen 174, 178 und die Zuführeinrichtung 18. Insbesondere erhöht sich in Transportrichtung T die Fördergeschwindigkeit sukzessive, so dass die Straffung der Papierbahn über die gesamte Förderlänge gewährleistet ist. Die Längstrennschweißeinrichtung 22 stellt dann die höchste Fördergeschwindigkeit bereit.

Wie der Fig. 13 zu entnehmen ist, sind die Zuführeinrichtungen 18 und 18' zu beiden Seiten des Transportbandes 80 neben dem Transportband 80 angeordnet. Die Packgüter 12 laufen somit zwischen den Zuführeinrichtungen 18 und 18' hindurch. Gleiches gilt für die Längstrennschweißeinrichtung 22 und 22'. Die Zuführeinrichtungen 18 und 18' sind jedoch in der Transportrichtung T im Wesentlichen fluchtend zu der Längstrennschweißeinrichtungen 22 und 22' angeordnet.

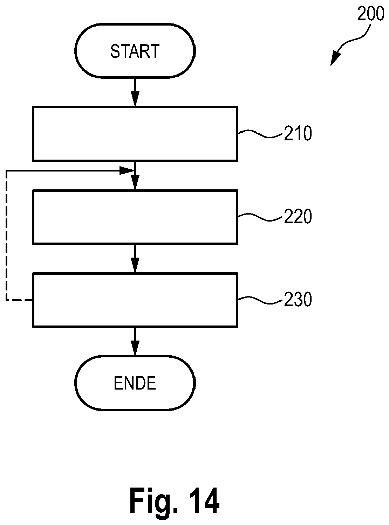

Die Fig. 14 zeigt ein schematisches Ablaufdiagramm eines Verfahrens zum Betreiben einer Verpackungsmaschine 200.

Zunächst erfolgt ein Schritt des Bereitstellens 210 einer Längstrennschweißeinrichtung 22, die mindestens ein erstes Paar von umlaufenden Endloselementen 134, 136; 144, 146 aufweist, die die erste und die zweite Papierbahn 14, 16 zwischen sich einziehen und in einer Papierbahnebene 19 führen, wobei die Längstrennschweißeinrichtung 22' eine Verschweißeinrichtung 127 aufweist, wobei die Verschweißeinrichtung 127 jeweils ein beheizbares Schweißrad 120 zum Verschweißen der Papierbahnen 14, 16 und eine Andrückbaugruppe 125 zum Abstützen der Papierbahnen 14, 16 gegen das Schweißrad 120 aufweist, wobei die Andrückbaugruppe 125 mindestens ein Andrückrad 122, 124, insbesondere genau zwei Andrückräder, aufweist, wobei das Schweißrad 120 zwischen einer Arbeitsposition, in der die Andrückbaugruppe 125 an dem Schweißrad 120 anliegt, und einer Ruheposition, in der das Schweißrad 120 von den Andrückbaugruppe 125 beabstandet ist, verstellbar ist.

Wird die Verpackungsmaschine 10 gestartet, erfolgt zunächst ein Fördern 220 der oberen Papierbahn 14 und der unteren Papierbahn 16 durch die Längstrennschweißeinrichtung 22 mittels des mindestens einen ersten Paars von umlaufenden Endloselementen 134, 136; 144, 146, wobei das Schweißrad in die Arbeitsposition verstellt ist und die Papierbahnen verschweißt. Dabei kann das Schweißrad 120 mittels eines Vorspannelements 126 in die Ruheposition vorgespannt werden, wobei das Schweißrad 120 mittels der Verstelleinrichtung 128 gegen eine Kraft des Vorspannelements 126 in die Arbeitsposition bewegt wird.

Es erfolgt dann ein Stoppen des Förderns in Intervallen, also ein getaktetes Stoppen. Das getaktete Stoppen des Förderns der der oberen Papierbahn 14 und der unteren Papierbahn 16 durch die Längstrennschweißeinrichtung 22 erfolgt, wobei das Schweißrad 120 während Stoppens in die Ruheposition verstellt ist. Dies kann erfolgen, indem die Verstelleinrichtung 126 nicht mehr gegen die Kraft des Vorspannelements 128 wirkt. Das Vorspannelement 128 bewirkt dann eine Verstellung des Schweißrads 120 zurück in die Ruheposition.

Die Ausgestaltung der Verstelleinrichtung 128 und des Vorspannelements 126 kann geeignet gewählt sein. Beispielsweise kann eine mechanische Umsetzung gewählt werden, in der das Vorspannelement ein Federelement ist und die Verstelleinrichtung ein Aktuator, beispielsweise. pneumatisch betrieben. Es kann auch eine elektromagnetische Ausgestaltung gewählt werden, in der das Vorspannelement 126 durch Permanentmagneten bereitgestellt ist und die Verstelleinrichtung 128 durch einen Elektromagneten bzw. eine mit Strom beaufschlagbare Spule. Es kann auch eine Kombination dieser Elemente gewählt werden, also eine Kombination mechanischer und elektromagnetischer Elemente.. Jedenfalls ist das Schweißrad 120 mittels des Vorspannelements 126 in die Ruheposition vorgespannt. Dies bewirkt, dass beispielsweise bei einem Stromausfall das Schweißrad 120 automatisch in die Ruheposition springt. Bei einem Notaus aus der Maschine erfolgt daher keine Beschädigung in der Papierbahn. Des Weiteren wird auf diese Weise bewirkt, dass während des Vorgangs des Quertrennschweißens, bei dem die Papierbahnen 14, 16 innerhalb der Längstrennschweißeinrichtung nicht in Transportrichtung T gefördert werden, das Schweißrad 120 in die Ruheposition bewegt wird, so dass während des Quertrennschweißvorgangs ebenfalls keine Beschädigung der Papierbahnen 14, 16 durch Wärmeeintrag erfolgt.

Während des Schritts 210 des Förderns erfolgt ein Trennen der Papierbahnen parallel zu einer Förderrichtung der Papierbahnen durch das mindestens eine erste Paar von umlaufenden Endloselementen 134, 136; 144, 146. Das Trennen erfolgt mittels eines rotierenden Trennmessers 130. Das rotierende Trennmesser 130 wird von derselben Antriebseinrichtung wie das mindestens eine erste Paar von umlaufenden Endloselementen 134, 136; 144, 146 angetrieben.

Nach einem Stillstand der Verpackungsmaschine 100 endet das Verfahren 200.

## Patentansprüche

1. Längstrennschweißeinrichtung (22) zum Trennen und Verschweißen einer oberen Papierbahn (14) und einer unteren Papierbahn (16), wobei die Längstrennschweißeinrichtung (22) mindestens ein erstes Paar von umlaufenden Endloselementen (134, 136; 144, 146) aufweist, die die obere und die untere Papierbahn (14, 16) zwischen sich einziehen und in einer Papierbahnebene (19) führen, wobei die Längstrennschweißeinrichtung (22) eine Verschweißeinrichtung (127) aufweist, wobei die Verschweißeinrichtung (127) jeweils ein beheizbares Schweißrad (120) zum Verschweißen der Papierbahnen (14, 16) und eine Andrückbaugruppe (125) zum Abstützen der Papierbahnen (14, 16) gegen das Schweißrad (120) aufweist, wobei die Andrückbaugruppe (125) mindestens ein Andrückrad (122, 124), insbesondere genau zwei Andrückräder, aufweist, wobei das Schweißrad (120) zwischen einer Arbeitsposition, in der die Andrückbaugruppe (125) an dem Schweißrad (120) anliegt, und einer Ruheposition, in der das Schweißrad (120) von den Andrückbaugruppe (125) beabstandet ist, verstellbar ist, und wobei die Verschweißeinrichtung (127) zumindest ein Vorspannelement (126) aufweist, das das Schweißrad (120) in die Ruheposition vorspannt, wobei die aufeinanderliegenden Papierbahnen (14, 16) in der Arbeitsposition in einem Anlagebereich (162) an dem Schweißrad (120) anliegen, wobei genau zwei Andrückräder (122, 124) zum Abstützen der Papierbahnen (14, 16) gegen das Schweißrad (120) vorgesehen sind, wobei die beiden Andrückräder (122, 124) voneinander in der Transportrichtung (T) beabstandet sind und bezüglich der Papierbahnebene (19) auf einer ersten Seite der aufeinanderliegenden Papierbahnen (14, 16) angeordnet sind, die einer zweiten Seite der aufeinanderliegenden Papierbahnen gegenüberliegt, auf der das Schweißrad (120) angeordnet ist, wobei der Anlagebereich (162) zwischen den beiden Andruckrädern (122, 124) liegt, und wobei der Anlagebereich (162) derart ausgebildet ist, dass die aufeinanderliegenden Papierbahnen (14, 16) das Schweißrad (120) zumindest teilweise entlang eines Außenumfangs umschlingen.

2. Längstrennschweißeinrichtung (22) nach Anspruch 1, **dadurch gekennzeichnet, dass** die aufeinanderliegenden Papierbahnen (14, 16) in der Ruheposition sowohl von dem Schweißmesser (120) als auch von der Andrückbaugruppe (125) beabstandet sind.

3. Längstrennschweißeinrichtung (22) nach Anspruch 1 oder 2, **dadurch gekennzeichnet, dass** eine Rotationsachse des Schweißrades (120) parallel zu einer Rotationsachse des mindestens einen Andruckrades (122, 124) der Andrückbaugruppe (125) ist, wobei die Rotationsachse des mindestens einen Andrückrades (125) innerhalb einer Breite der Projektion des Schweißrades (120) auf die Papierbahnebene (19) liegt.

4. Längstrennschweißeinrichtung (22) nach einem der Ansprüche 1 bis 3, **dadurch gekennzeichnet, dass** das Schweißrad (120) oberhalb der Papierbahnebene (19) angeordnet ist, und dass ein Außenumfang des Schweißrades (120) unter eine Ebene (164) reicht, die an den höchsten Punkten der zwei Andrückräder (122, 124) der Andrückbaugruppe (125) anliegt.

5. Längstrennschweißeinrichtung (22) nach einem der Ansprüche 1 bis 3, **dadurch gekennzeichnet, dass** das Schweißrad (120) unterhalb der Papierbahnebene (19) angeordnet ist, und dass ein Außenumfang des Schweißrades (120) über eine Ebene reicht, die an den niedrigsten Punkten der Andrückräder (122, 124) der Andrückbaugruppe (125) anliegt.

6. Längstrennschweißeinrichtung (22) nach einem der Ansprüche 1 bis 5, **dadurch gekennzeichnet, dass** die Verschweißeinrichtung (127) in der Transportrichtung (T) vor den ersten Paaren von Endloselementen der Längstrennschweißeinrichtungen (22, 22') angeordnet ist.

7. Längstrennschweißeinrichtung (22) nach einem der Ansprüche 1 bis 6, **dadurch gekennzeichnet, dass** die Längstrennschweißeinrichtung (22) des Weiteren eine Längstrenneinrichtung (130, 132) zum Durchtrennen der aufeinanderliegenden Papierbahnen (14, 16) parallel zu der Transportrichtung (T) aufweist, wobei die Längstrenneinrichtung ein rotierendes Kreismesser (130) und ein Stützrad (132) zum Abstützen der Papierbahnen (14, 16) gegen das Kreismesser (130) aufweist.

8. Längstrennschweißeinrichtung (22) nach Anspruch 7, **dadurch gekennzeichnet, dass** das Kreismesser (130) und das Stützrad (132) sich in einer Kreismesserebene erstrecken, die parallel zu der Transportrichtung (T) angeordnet ist, und dass ein Paar von Endloselementen der Längstrennschweißeinrichtung (22) in einer ersten Umlaufebene umläuft, wobei die erste Umlaufebene und die Kreismesserebene jeweils senkrecht zu der Papierbahnebene (19) verlaufen, wobei die erste Umlaufebene und die Kreismesserebene parallel zueinander angeordnet sind.

9. Längstrennschweißeinrichtung (22) nach Anspruch 8, **dadurch gekennzeichnet, dass** die Längstrennschweißeinrichtung (22) des Weiteren jeweils mindestens ein zweites Paar von umlaufenden Endloselementen (144, 146) aufweist, die die aufeinanderliegenden Papierbahnen (14, 16) an den zwei entgegengesetzten Längsseiten der Papierbahnen (180, 180`) zwischen sich einziehen und in der Papierbahnebene (19) führen, wobei das Kreismesser in der Papierbahnebene (19) orthogonal zu der Transportrichtung (T) jeweils zwischen dem ersten Paar von Endloselementen der jeweiligen Längstrennschweißeinrichtung (22, 22') und dem zweiten Paar von Endloselementen derselben Längstrennschweißeinrichtung (22, 22') angeordnet ist.

10. Längstrennschweißeinrichtung (22) nach Anspruch 8 oder 9, **dadurch gekennzeichnet, dass** die Längstrenneinrichtung (130, 132) in der Transportrichtung (T) stromabwärts von der jeweiligen Verschweißeinrichtung (128) angeordnet ist.

11. Längstrennschweißsystem (21) mit einer ersten und einer zweiten Längstrennschweißeinrichtung (22, 22') zum Verschweißen der Papierbahnen (14, 16) parallel zu der Transportrichtung (T) an zwei entgegengesetzten Längsseiten (180, 180`) der Papierbahnen (14, 16), wobei sowohl die erste Längstrennschweißeinrichtung (22) als auch die zweite Längstrennschweißeinrichtung (22') eine Längstrennschweißeinrichtung nach einem der Ansprüche 1 bis 10 ist, wobei die erste und die zweite Längstrennschweißeinrichtung (22, 22') jeweils mindestens das erste Paar von umlaufenden Endloselementen (134, 136; 144, 146) aufweist, die die erste und die zweite Papierbahn (14, 16) an den zwei entgegengesetzten Längsseiten (180, 180`) der Papierbahnen (14, 16) zwischen sich einziehen und in einer Papierbahnebene (19) führen.

12. Verpackungsmaschine (10) zum Verpacken eines Packguts (12) mit einer aus einer oberen Papierbahn (14) und einer unteren Papierbahn (16) erzeugten Umverpackung, wobei die Verpackungsmaschine (10) ein Längstrennschweißsystem nach Anspruch 11 aufweist.

13. Verpackungsmaschine (10) nach Anspruch 12, wobei die Verpackungsmaschine (10) eine Transporteinrichtung (80) zum Transportieren des Packguts (12) in einer Transportrichtung (T), eine Quertrennschweißeinrichtung (20) zum Verschweißen der Papierbahnen quer zu der Transportrichtung (T), und eine erste und eine zweite Zuführeinrichtung (18, 18') zum Zuführen der Papierbahnen in die Quertrennschweißeinrichtung (20) aufweist, wobei die erste und die zweite Zuführeinrichtung (18, 18') jeweils mindestens ein Paar von umlaufenden Endloselementen (34`, 34") zum Fördern der Papierbahnen (14, 16) aufweist, wobei ein erstes Endloselement (34`) des Paars von Endloselementen (34`, 34") zum Fördern der oberen Papierbahn (14) ausgebildet ist und ein zweites Endloselement (34") des Paars von Endloselementen (34`, 34") zum Fördern der unteren Papierbahn (16) ausgebildet ist, und wobei die Quertrennschweißeinrichtung (20) in der Transportrichtung (T) stromaufwärts der ersten und der zweiten Längstrennschweißeinrichtung (22, 22') angeordnet ist, und wobei die Verpackungsmaschine (10) eine erste Antriebseinrichtung (24) zum Antreiben der Paare von Endloselementen (34, 34`) der Zuführeinrichtungen (18, 18') und eine zweite Antriebseinrichtung (26) zum Antreiben der ersten Paare von Endloselementen (134, 136; 144, 146) der Längstrennschweißeinrichtungen (22, 22') aufweist.

14. Verpackungsmaschine (10) nach Anspruch 12 oder 13, **dadurch gekennzeichnet, dass** die Quertrennschweißeinrichtung (20) einen ersten Stempel (86) und einen zweiten Stempel (88) aufweist, wobei der erste Stempel zwei voneinander durch einen ersten Spalt (95) beabstandete Beheizungseinrichtungen (92, 94) aufweist, deren dem zweiten Stempel zugewandte Flächen (93, 95) jeweils eine Querschweißfläche ausbilden, wobei die Querschweißflächen in einer gemeinsamen Schweißflächenebene (90) parallel zu der Papierbahnebene (19) liegen, wobei der zweite Stempel zwei voneinander durch einen zweiten Spalt (103) beabstandete Druckaufnahmeeinrichtungen aufweist, wobei die Druckaufnahmeeinrichtungen (100, 102) eine dem ersten Stempel (86) zugewandte Stützfläche ausbilden, wobei der zweite Stempel (88) ein in dem zweiten Spalt angeordnetes Trennmesser (104) aufweist, wobei der erste Spalt des ersten Stempels gegenüberliegend zu dem zweiten Spalt des zweiten Stempels angeordnet ist, wobei der erste und der zweite Stempel orthogonal zu der Papierbahnebene (19) relativ zueinander bewegbar sind.

15. Verfahren (200) zum Längstrennschweißen einer oberen und einer unteren Papierbahn (14, 16), mit den folgenden Schritten:
• Bereitstellen (210) einer Längstrennschweißeinrichtung (22), die mindestens ein erstes Paar von umlaufenden Endloselementen (134, 136; 144, 146) aufweist, die die obere und die untere Papierbahn (14, 16) zwischen sich einziehen und in einer Papierbahnebene (19) führen, wobei die Längstrennschweißeinrichtung (22) t2" eine Verschweißeinrichtung (127) aufweist, wobei die Verschweißeinrichtung (127) jeweils ein beheizbares Schweißrad (120) zum Verschweißen der Papierbahnen (14, 16) und eine Andrückbaugruppe (125) zum Abstützen der Papierbahnen (14, 16) gegen das Schweißrad (120) aufweist, wobei die Andrückbaugruppe (125) mindestens ein Andrückrad (122, 124), insbesondere genau zwei Andrückräder, aufweist, wobei das Schweißrad (120) zwischen einer Arbeitsposition, in der die Andrückbaugruppe (125) an dem Schweißrad (120) anliegt, und einer Ruheposition, in der das Schweißrad (120) von den Andrückbaugruppe (125) beabstandet ist, verstellbar ist, wobei die aufeinanderliegenden Papierbahnen (14, 16) in der Arbeitsposition in einem Anlagebereich (162) an dem Schweißrad (120) anliegen, wobei genau zwei Andrückräder (122, 124) zum Abstützen der Papierbahnen (14, 16) gegen das Schweißrad (120) vorgesehen sind, wobei die beiden Andrückräder (122, 124) voneinander in der Transportrichtung (T) beabstandet sind und bezüglich der Papierbahnebene (19) auf einer ersten Seite der aufeinanderliegenden Papierbahnen (14, 16) angeordnet sind, die einer zweiten Seite der aufeinanderliegenden Papierbahnen gegenüberliegt, auf der das Schweißrad (120) angeordnet ist, wobei der Anlagebereich (162) zwischen den beiden Andruckrädern (122, 124) liegt, und wobei der Anlagebereich (162) derart ausgebildet ist, dass die aufeinanderliegenden Papierbahnen (14, 16) das Schweißrad (120) zumindest teilweise entlang eines Außenumfangs umschlingen;
• Fördern (220) der oberen Papierbahn (14) und der unteren Papierbahn (16) durch die Längstrennschweißeinrichtung (22) mittels des mindestens einen ersten Paars von umlaufenden Endloselementen (134, 136; 144, 146), wobei das Schweißrad in die Arbeitsposition verstellt ist und die Papierbahnen verschweißt; und
• Getaktetes Stoppen (230) des Förderns der oberen Papierbahn (14) und der unteren Papierbahn (16) durch die Längstrennschweißeinrichtung (22), wobei das Schweißrad (120) während Stoppens in die Ruheposition verstellt ist.

## Claims

1. A longitudinal separating and welding device (22) for separating and welding an upper paper web (14) and a lower paper web (16), wherein the longitudinal separating and welding device (22) comprises at least a first pair of circulating endless elements (134, 136; 144, 146) which draw in the first and second paper webs (14, 16) between them and guide them in a paper web plane (19), wherein the longitudinal separating and welding device (22') comprises a welding device (127), wherein the welding device (127) has a heatable welding wheel (120) for welding the paper webs (14, 16) and a pressing assembly (125) for supporting the paper webs (14, 16) against the welding wheel (120), wherein the pressing assembly (125) comprises at least one pressing wheel (122, 124), in particular exactly two pressing wheels, wherein the welding wheel (120) is adjustable between a working position, in which the pressing assembly (125) is in contact with the welding wheel (120), and a rest position, in which the welding wheel (120) is spaced from the pressing assembly (125), and wherein the welding device (127) comprises at least one pre-tensioning element (126) which biases the welding wheel (120) into the rest position, wherein the overlapping paper webs (14, 16) are in contact with the welding wheel (120) in a contact area (162) in the working position, wherein exactly two pressing wheels (122, 124) are provided for supporting the paper webs (14, 16) against the welding wheel (120), wherein the two pressing wheels (122, 124) are spaced apart from each other in the transport direction (T) and are arranged on a first side of the overlapping paper webs (14, 16) with respect to the paper web plane (19), which opposes a second side of the overlapping paper webs on which the welding wheel (120) is arranged, wherein the contact area (162) is located between the two pressing wheels (122, 124), and wherein the contact area (162) is configured such that the overlapping paper webs (14, 16) at least partially wrap around the welding wheel (120) along an outer circumference.

2. The longitudinal separating and welding device (22) according to claim 1, **characterized in that** the overlapping paper webs (14, 16) are spaced from both the welding wheel (120) and the pressing assembly (125) in the rest position.

3. The longitudinal separating and welding device (22) according to claim 1 or 2, **characterized in that** a rotation axis of the welding wheel (120) is parallel to a rotation axis of the at least one pressing wheel (122, 124) of the pressing assembly (125), wherein the rotation axis of the at least one pressing wheel (125) lies within a width of the projection of the welding wheel (120) onto the paper web plane (19).

4. The longitudinal separating and welding device (22) according to one of claims 1 to 3, **characterized in that** the welding wheel (120) is arranged above the paper web plane (19), and that an outer circumference of the welding wheel (120) extends below a plane (164) which is in contact with the highest points of the two pressing wheels (122, 124) of the pressing assembly (125).

5. The longitudinal separating and welding device (22) according to one of claims 1 to 3, **characterized in that** the welding wheel (120) is arranged below the paper web plane (19), and that an outer circumference of the welding wheel (120) extends above a plane which is in contact with the lowest points of the pressing wheels (122, 124) of the pressing assembly (125).

6. The longitudinal separating and welding device (22) according to one of claims 1 to 5, **characterized in that** the welding device (127) is arranged in the transport direction (T) ahead of the first pairs of endless elements of the longitudinal separating and welding devices (22, 22').

7. The longitudinal separating and welding device (22) according to one of claims 1 to 6, **characterized in that** the longitudinal separating and welding device (22) further comprises a longitudinal separating device (130, 132) for cutting the overlapping paper webs (14, 16) parallel to the transport direction (T), wherein the longitudinal separating device comprises a rotating circular knife (130) and a support wheel (132) for supporting the paper webs (14, 16) against the circular knife (130).

8. The longitudinal separating and welding device (22) according to claim 7, **characterized in that** the circular knife (130) and the support wheel (132) extend in a circular knife plane which is arranged parallel to the transport direction (T), and that a pair of endless elements of the longitudinal separating and welding device (22) circulate in a first circulation plane, wherein the first circulation plane and the circular knife plane each run perpendicular to the paper web plane (19), and wherein the first circulation plane and the circular knife plane are arranged parallel to each other.

9. The longitudinal separating and welding device (22) according to claim 8, **characterized in that** the longitudinal separating and welding device (22) further comprises at least one second pair of circulating endless elements (144, 146), which draw in the overlapping paper webs (14, 16) between them at the two opposite longitudinal sides of the paper webs (180, 180') and guide them in the paper web plane (19), wherein the circular knife in the paper web plane (19) is arranged orthogonal to the transport direction (T) between the first pair of endless elements of the respective longitudinal separating and welding device (22, 22') and the second pair of endless elements of the same longitudinal separating and welding device (22, 22').

10. The longitudinal separating and welding device (22) according to claim 8 or 9, **characterized in that** the longitudinal separating device (130, 132) is arranged downstream of the respective welding device (128) in the transport direction (T).

11. A longitudinal separating and welding system (21) with a first and a second longitudinal separating and welding device (22, 22') for welding the paper webs (14, 16) parallel to the transport direction (T) at two opposite longitudinal sides (180, 180') of the paper webs (14, 16), wherein both the first longitudinal separating and welding device (22) and the second longitudinal separating and welding device (22') are longitudinal separating and welding devices according to one of claims 1 to 10, wherein the first and the second longitudinal separating and welding device (22, 22') each comprise at least the first pair of circulating endless elements (134, 136; 144, 146), which draw in the first and the second paper web (14, 16) between them at the two opposite longitudinal sides (180, 180') of the paper webs (14, 16) and guide them in a paper web plane (19).

12. A packaging machine (10) for packaging a product (12) with an outer packaging made from an upper paper web (14) and a lower paper web (16), wherein the packaging machine (10) comprises a longitudinal separating and welding system according to claim 11.

13. The packaging machine (10) according to claim 12, wherein the packaging machine (10) comprises a transport device (80) for transporting the product (12) in a transport direction (T), a transverse separating and welding device (20) for welding the paper webs transversely to the transport direction (T), and a first and a second feeding device (18, 18') for feeding the paper webs into the transverse separating and welding device (20), wherein the first and the second feeding device (18, 18') each comprise at least one pair of circulating endless elements (34', 34") for conveying the paper webs (14, 16), wherein a first endless element (34') of the pair of endless elements (34', 34") is designed for conveying the upper paper web (14) and a second endless element (34") of the pair of endless elements (34', 34") is designed for conveying the lower paper web (16), and wherein the transverse separating and welding device (20) is arranged upstream of the first and the second longitudinal separating and welding device (22, 22') in the transport direction (T), and wherein the packaging machine (10) comprises a first drive device (24) for driving the pairs of endless elements (34, 34') of the feeding devices (18, 18') and a second drive device (26) for driving the first pairs of endless elements (134, 136; 144, 146) of the longitudinal separating and welding devices (22, 22').

14. The packaging machine (10) according to claim 12 or 13, **characterized in that** the transverse separating and welding device (20) comprises a first punch (86) and a second punch (88), wherein the first punch has two heating devices (92, 94) spaced apart from each other by a first gap (95), each of which forms a transverse welding surface on the surfaces (93, 95) facing the second punch, wherein the transverse welding surfaces lie in a common welding surface plane (90) parallel to the paper web plane (19), wherein the second punch has two pressure receiving devices spaced apart from each other by a second gap (103), wherein the pressure receiving devices (100, 102) form a support surface facing the first punch (86), wherein the second punch (88) comprises a separating knife (104) arranged in the second gap, wherein the first gap of the first punch is arranged opposite the second gap of the second punch, and wherein the first and the second punch are movable relative to each other orthogonally to the paper web plane (19).

15. Method (200) for longitudinal separating and welding an upper and a lower paper web (14, 16), comprising the following steps:
• Providing (210) a longitudinal separating and welding device (22) that has at least a first pair of circulating endless elements (134, 136; 144, 146) which draw in the first and the second paper web (14, 16) between them and guide them in a paper web plane (19), wherein the longitudinal separating and welding device (22') comprises a welding device (127), wherein the welding device (127) has a heatable welding wheel (120) for welding the paper webs (14, 16) and a pressing assembly (125) for supporting the paper webs (14, 16) against the welding wheel (120), wherein the pressing assembly (125) comprises at least one pressing wheel (122, 124), in particular exactly two pressing wheels, wherein the welding wheel (120) is adjustable between a working position, in which the pressing assembly (125) is in contact with the welding wheel (120), and a rest position, in which the welding wheel (120) is spaced from the pressing assembly (125), wherein the overlapping paper webs (14, 16) are in contact with the welding wheel (120) in a contact area (162) in the working position, wherein exactly two pressing wheels (122, 124) are provided for supporting the paper webs (14, 16) against the welding wheel (120), wherein the two pressing wheels (122, 124) are spaced apart from each other in the transport direction (T) and are arranged on a first side of the overlapping paper webs (14, 16) with respect to the paper web plane (19), which opposes a second side of the overlapping paper webs on which the welding wheel (120) is arranged, wherein the contact area (162) is located between the two pressing wheels (122, 124), and wherein the contact area (162) is configured such that the overlapping paper webs (14, 16) at least partially wrap around the welding wheel (120) along an outer circumference;
• Conveying (220) the upper paper web (14) and the lower paper web (16) through the longitudinal separating and welding device (22) by means of the at least one first pair of circulating endless elements (134, 136; 144, 146), wherein the welding wheel is adjusted to the working position and welds the paper webs; and
• Cyclically stopping (230) the conveying of the upper paper web (14) and the lower paper web (16) through the longitudinal separating and welding device (22), wherein the welding wheel (120) is adjusted to the rest position during stopping.

## Revendications

1. Dispositif de soudage et de séparation longitudinaux (22) permettant de séparer et de souder une bande de papier supérieure (14) et une bande de papier inférieure (16), dans lequel le dispositif de soudage et de séparation longitudinaux (22) présente au moins une première paire d'éléments sans fin (134, 136 ; 144, 146) circulants qui tirent la bande de papier supérieure et la bande de papier inférieure (14, 16) entre eux et les guident dans un plan de bandes de papier (19), dans lequel le dispositif de soudage et de séparation longitudinaux (22) présente un dispositif de soudage (127), dans lequel le dispositif de soudage (127) présente respectivement une roue de soudage (120) pouvant être chauffée et permettant de souder les bandes de papier (14, 16) et un module de pression (125) permettant de soutenir les bandes de papier (14, 16) contre la roue de soudage (120), dans lequel le module de pression (125) présente au moins une roue de pression (122, 124), en particulier exactement deux roues de pression, dans lequel la roue de soudage (120) peut être réglée entre une position de travail, dans laquelle le module de pression (125) s'appuie contre la roue de soudage (120), et une position de repos, dans laquelle la roue de soudage (120) est espacée du module de pression (125), et dans lequel le dispositif de soudage (127) présente au moins un élément de précontrainte (126) qui précontraint la roue de soudage (120) dans la position de repos, dans lequel les bandes de papier (14, 16) superposées s'appuient, dans la position de travail, contre la roue de soudage (120) dans une zone d'appui (162), dans lequel exactement deux roues de pression (122, 124) sont prévues pour soutenir les bandes de papier (14, 16) contre la roue de soudage (120), dans lequel les deux roues de pression (122, 124) sont espacées l'une de l'autre dans le sens de transport (T) et sont disposées, par rapport au plan de bandes de papier (19), sur un premier côté des bandes de papier (14, 16) superposées qui est opposé à un second côté des bandes de papier superposées, sur lequel second côté est disposée la roue de soudage (120), dans lequel la zone d'appui (162) est située entre les deux roues de pression (122, 124), et dans lequel la zone d'appui (162) est conçue de telle sorte que les bandes de papier (14, 16) superposées entourent la roue de soudage (120) au moins partiellement le long d'une circonférence extérieure.

2. Dispositif de soudage et de séparation longitudinaux (22) selon la revendication 1, **caractérisé en ce que** les bandes de papier (14, 16) superposées sont espacées, dans la position de repos, à la fois de la lame de soudage (120) et du module de pression (125).

3. Dispositif de soudage et de séparation longitudinaux (22) selon la revendication 1 ou 2, **caractérisé en ce qu'**un axe de rotation de la roue de soudage (120) est parallèle à un axe de rotation de l'au moins une roue de pression (122, 124) du module de pression (125), dans lequel l'axe de rotation de l'au moins une roue de pression (125) est situé dans une largeur de la projection de la roue de soudage (120) sur le plan de bandes de papier (19).

4. Dispositif de soudage et de séparation longitudinaux (22) selon l'une des revendications 1 à 3, **caractérisé en ce que** la roue de soudage (120) est disposée au-dessus du plan de bandes de papier (19), **et en ce qu'**une circonférence extérieure de la roue de soudage (120) s'étend en dessous d'un plan (164) qui s'appuie sur les points les plus élevés des deux roues de pression (122, 124) du module de pression (125).

5. Dispositif de soudage et de séparation longitudinaux (22) selon l'une des revendications 1 à 3, **caractérisé en ce que** la roue de soudage (120) est disposée en dessous du plan de bandes de papier (19), **et en ce qu'**une circonférence extérieure de la roue de soudage (120) s'étend au-dessus d'un plan qui s'appuie sur les points les plus bas des roues de pression (122, 124) du module de pression (125).

6. Dispositif de soudage et de séparation longitudinaux (22) selon l'une des revendications 1 à 5, **caractérisé en ce que** le dispositif de soudage (127) est disposé avant les premières paires d'éléments sans fin des dispositifs de soudage et de séparation longitudinaux (22, 22') dans le sens de transport (T).

7. Dispositif de soudage et de séparation longitudinaux (22) selon l'une des revendications 1 à 6, **caractérisé en ce que** le dispositif de soudage et de séparation longitudinaux (22) présente en outre un dispositif de séparation longitudinale (130, 132) permettant de séparer les bandes de papier (14, 16) superposées parallèlement au sens de transport (T), dans lequel le dispositif de séparation longitudinale présente une lame circulaire (130) rotative et une roue de soutien (132) permettant de soutenir les bandes de papier (14, 16) contre la lame circulaire (130).

8. Dispositif de soudage et de séparation longitudinaux (22) selon la revendication 7, **caractérisé en ce que** la lame circulaire (130) et la roue de soutien (132) s'étendent dans un plan de lame circulaire qui est disposé parallèlement au sens de transport (T), **et en ce qu'**une paire d'éléments sans fin du dispositif de soudage et de séparation longitudinaux (22) circulent dans un premier plan de circulation, dans lequel le premier plan de circulation et le plan de lame circulaire sont respectivement perpendiculaires au plan de bandes de papier (19), dans lequel le premier plan de circulation et le plan de lame circulaire sont disposés parallèlement l'un à l'autre.

9. Dispositif de soudage et de séparation longitudinaux (22) selon la revendication 8, **caractérisé en ce que** le dispositif de soudage et de séparation longitudinaux (22) présente en outre respectivement au moins une seconde paire d'éléments sans fin (144, 146) circulants qui tirent entre eux les bandes de papier (14, 16) superposées sur les deux côtés longitudinaux opposés des bandes de papier (180, 180') et les guident dans le plan de bandes de papier (19), dans lequel la lame circulaire est disposée dans le plan de bandes de papier (19) orthogonalement au sens de transport (T), respectivement entre la première paire d'éléments sans fin du dispositif de soudage et de séparation longitudinaux (22, 22') respectif et la seconde paire d'éléments sans fin du même dispositif de soudage et de séparation longitudinaux (22, 22').

10. Dispositif de soudage et de séparation longitudinaux (22) selon la revendication 8 ou 9, **caractérisé en ce que** le dispositif de séparation longitudinale (130, 132) est disposé en aval du dispositif de soudage (128) respectif dans le sens de transport (T).

11. Système de soudage et de séparation longitudinaux (21) comportant un premier et un second dispositif de soudage et de séparation longitudinaux (22, 22') permettant de souder les bandes de papier (14, 16) parallèlement au sens de transport (T) sur deux côtés longitudinaux (180, 180') opposés des bandes de papier (14, 16), dans lequel à la fois le premier dispositif de soudage et de séparation longitudinaux (22) et le second dispositif de soudage et de séparation longitudinaux (22') sont des dispositifs de soudage et de séparation longitudinaux selon l'une des revendications 1 à 10, dans lequel le premier et le second dispositif de soudage et de séparation longitudinaux (22, 22') présentent respectivement au moins la première paire d'éléments sans fin (134, 136 ; 144, 146) circulants qui tirent entre eux la première et la seconde bande de papier (14, 16) sur les deux côtés longitudinaux (180, 180') opposés des bandes de papier (14, 16) et les guident dans un plan de bandes de papier (19).

12. Machine d'emballage (10) permettant d'emballer un produit à emballer (12) avec un suremballage produit à partir d'une bande de papier supérieure (14) et d'une bande de papier inférieure (16), dans laquelle la machine d'emballage (10) présente un système de soudage et de séparation longitudinaux selon la revendication 11.

13. Machine d'emballage (10) selon la revendication 12, dans laquelle la machine d'emballage (10) présente un dispositif de transport (80) permettant de transporter le produit à emballer (12) dans un sens de transport (T), un dispositif de soudage et de séparation transversaux (20) permettant de souder les bandes de papier transversalement au sens de transport (T), et un premier et un second dispositif d'amenée (18, 18') permettant d'amener les bandes de papier dans le dispositif de soudage et de séparation transversaux (20), dans laquelle le premier et le second dispositif d'amenée (18, 18') présentent respectivement au moins une paire d'éléments sans fin (34`, 34") circulants permettant d'acheminer les bandes de papier (14, 16), dans laquelle un premier élément sans fin (34') de la paire d'éléments sans fin (34`, 34") est conçu pour acheminer la bande de papier supérieure (14) et un second élément sans fin (34") de la paire d'éléments sans fin (34', 34") est conçu pour acheminer la bande de papier inférieure (16), et dans laquelle le dispositif de soudage et de séparation transversaux (20) est disposé en amont du premier et du second dispositif de soudage et de séparation longitudinaux (22, 22') dans le sens de transport (T), et dans laquelle la machine d'emballage (10) présente un premier dispositif d'entraînement (24) permettant d'entraîner les paires d'éléments sans fin (34, 34') des dispositifs d'amenée (18, 18') et un second dispositif d'entraînement (26) permettant d'entraîner les premières paires d'éléments sans fin (134, 136 ; 144, 146) des dispositifs de soudage et de séparation longitudinaux (22, 22').

14. Machine d'emballage (10) selon la revendication 12 ou 13, **caractérisée en ce que** le dispositif de soudage et de séparation transversaux (20) présente un premier poinçon (86) et un second poinçon (88), dans laquelle le premier poinçon présente deux dispositifs de chauffage (92, 94) espacés l'un de l'autre par une première fente (95) et dont les surfaces (93, 95) tournées vers le second poinçon forment respectivement une surface de soudage transversal, dans laquelle les surfaces de soudage transversal sont situées dans un plan de surfaces de soudage commun (90) parallèle au plan de bandes de papier (19), dans laquelle le second poinçon présente deux dispositifs d'absorption de pression espacés l'un de l'autre par une seconde fente (103), dans laquelle les dispositifs d'absorption de pression (100, 102) forment une surface de soutien tournée vers le premier poinçon (86), dans laquelle le second poinçon (88) présente une lame de séparation (104) disposée dans la seconde fente, dans laquelle la première fente du premier poinçon est disposée en face de la seconde fente du second poinçon, dans laquelle le premier et le second poinçon sont mobiles l'un par rapport à l'autre orthogonalement au plan de bandes de papier (19).

15. Procédé (200) permettant de souder et de séparer longitudinalement une bande de papier supérieure et une bande de papier inférieure (14, 16), comportant les étapes suivantes :
• fourniture (210) d'un dispositif de soudage et de séparation longitudinaux (22) qui présente au moins une première paire d'éléments sans fin (134, 136 ; 144, 146) circulants qui tirent entre eux la bande de papier supérieure et la bande de papier inférieure (14, 16) et les guident dans un plan de bandes de papier (19), dans lequel le dispositif de soudage et de séparation longitudinaux (22) présente un dispositif de soudage (127), dans lequel le dispositif de soudage (127) présente respectivement une roue de soudage (120) pouvant être chauffée et permettant de souder les bandes de papier (14, 16) et un module de pression (125) permettant de soutenir les bandes de papier (14, 16) contre la roue de soudage (120), dans lequel le module de pression (125) présente au moins une roue de pression (122, 124), en particulier exactement deux roues de pression, dans lequel la roue de soudage (120) peut être réglée entre une position de travail, dans laquelle le module de pression (125) s'appuie contre la roue de soudage (120), et une position de repos, dans laquelle la roue de soudage (120) est espacée du module de pression (125), dans lequel les bandes de papier (14, 16) superposées s'appuient, dans la position de travail, contre la roue de soudage (120) dans une zone d'appui (162), dans lequel exactement deux roues de pression (122, 124) sont prévues pour soutenir les bandes de papier (14, 16) contre la roue de soudage (120), dans lequel les deux roues de pression (122, 124) sont espacées l'une de l'autre dans le sens de transport (T) et sont disposées, par rapport au plan de bandes de papier (19), sur un premier côté des bandes de papier (14, 16) superposées qui est opposé à un second côté des bandes de papier superposées, sur lequel second côté est disposée la roue de soudage (120), dans lequel la zone d'appui (162) est située entre les deux roues de pression (122, 124), et dans lequel la zone d'appui (162) est conçue de telle sorte que les bandes de papier (14, 16) superposées entourent la roue de soudage (120) au moins partiellement le long d'une circonférence extérieure ;
• acheminement (220) de la bande de papier supérieure (14) et de la bande de papier inférieure (16) à travers le dispositif de soudage et de séparation longitudinaux (22) au moyen de l'au moins une première paire d'éléments sans fin (134, 136 ; 144, 146) circulants, dans lequel la roue de soudage est réglée dans la position de travail et soude les bandes de papier ; et
• arrêt cadencé (230) de l'acheminement de la bande de papier supérieure (14) et de la bande de papier inférieure (16) par le dispositif de soudage et de séparation longitudinaux (22), dans lequel la roue de soudage (120) est réglée dans la position de repos pendant l'arrêt.
